# EUROPEAN PATENT APPLICATION

(11) **EP 3 798 934 A1**
(43) Date of publication of application: **31.03.2021**
(21) Application number: 19200147.7
(22) Date of filing: 27.09.2019
(51) Int. Cl.: G06N 20/20, G06N 3/04, G06N 3/12, G06N 5/00, G06N 5/02, G06N 7/00

(54) **METHOD AND SYSTEM FOR SCALABLE AND DECENTRALIZED INCREMENTAL MACHINE LEARNING WHICH PROTECTS DATA PRIVACY**

(71) Applicant: Siemens Healthcare GmbH, 91052 Erlangen (DE)
(72) Inventor: Vodencarevic, Asmir, 90763 Fürth (DE); Christ, Tilo, 91052 Erlangen (DE)

(57) **Abstract**

A Computer-implemented method for client-specific federated learning is disclosed which is adapted to be applied in a system comprising a central server unit and a plurality of client units, wherein the client units are respectively located at different local sites and respectively comprise local data which is subject to data privacy regulations. The method comprises the step of providing, to one or more of the client units, a toolset, the toolset being configured such that a plurality of different machine learned models can be derived from the toolset at the one or more client units. It further comprises the step of receiving, from the one or more client units, one or more machine learned models, the one or more machine learned models being respectively derived from the toolset and trained based and the respective local data by the client units, and the step of storing the one or more machine learned models in the central server unit.

## Description

Machine learning methods and algorithms are applied widely to generate insights and/or (predictive) computational models from data. Typically, data is brought to a processing unit (such as a cloud) which can run such methods and algorithms to train models or generate insights. In this regard, machine learning methods have proven very versatile in various fields of application. They are used, for instance, to support decision making in autonomous driving. Likewise, machine learning methods are relied on for providing a medical diagnosis by automated systems processing physiological measurements.

However, due to data privacy regulations, it is often not possible to bring data to an external processing unit which may execute machine learning methods and algorithms but whose ownership deviates from the one of the data. Often, under such circumstances, the data always has to stay on-site with the data owner. This situation in many cases arises in the healthcare business where the inherent sensitivity of patient related data raises important patient privacy concerns.

One way of addressing this problem is to implement a distributed or federated learning scheme. Here, a central machine learned model hosted at a central server unit may be improved based on the usage reported by many client units. Thereby, a readily trained, functioning, and deployable central machine learned model is distributed to the client units and executed locally. Each client unit randomly, periodically, or on command may send a local update to the central server unit. The local update may summarize a local change to the machine learned model based on the local data gathered by the client units. The central server unit may use the local updates to improve the machine learned model. In turn, the central server unit may then download a modified machine learned model that implements the learning modification based on actual usage reported by the client units. This enables the client units to collaboratively learn and improve a shared machine learned model while their local and potentially private data is not distributed outside of the client units.

However, this approach has the drawback that it builds on one unifying shared machine learned model which is distributed to all client units. Albeit being continuously optimized by the joint action of the client units, the machine learned model is, by definition, tailored to one specific application. For many applications, such as speech pattern recognition in smartphones this may not be problematic, since the field of application of machine learned model is often narrow and clearly defined. In these cases, the local updates merely relate to a fine tuning of the shared machine learned model while the fundamental building blocks of the machine learned model remain essentially untouched. The profile of requirements may be very different for other fields of application, however. In particular, this applies for the healthcare business. Here, the local data typically consists of patient data such as medical images, pathology data, laboratory test results and the like, which inherently have a huge degree of variation from site to site. Likewise, the task, a machine learned model has to fulfill may vary considerably from site to site. What is more, also the information that needs to be processed by the machine learned model may vary considerably according to the field of application. For instance, machine learned models for the computer-assisted diagnosis of rheumatic arthritis may require a completely different approach as compared to machine learned models facilitating the detection of lesions in CT images. Under such circumstances, there will rarely be a machine learned model which works best for all datasets and tasks. Thus, a shared machine learned model optimized by federated learning may underperform on certain sites as there is not enough leeway for customizing a shared machine learned model according to local needs.

Accordingly, it is an object of the present application to provide means and/or methods which enable to provide machine learned models to local sites in a way that protects their data privacy and still enables to flexibly adapt the machine learned model to the specific local circumstances.

This object is solved by a method for client-specific federated learning, corresponding system, corresponding computer-program product and computer-readable storage medium and a method for locally cross-validating machine learned models according to the independent claims. Alternative embodiments are object of the dependent claims and are set out below.

In the following, the technical solution according to the present invention is described with respect to the claimed apparatuses as well as with respect to the claimed methods. Features, advantages or alternative embodiments described herein can likewise be assigned to other claimed objects and vice versa. In other words, claims addressing the inventive method can be improved by features described or claimed with respect to the apparatuses. In this case, functional features of the method are embodied by objective units or elements of the apparatus, for instance.

According to an aspect, a computer-implemented method for client-specific federated learning in a system comprising a central server unit and a plurality of client units is provided. The client units are respectively located at different local sites and respectively comprise local data. The method comprises several steps. A first step is directed to providing, to one or more of the client units, a toolset. The toolset is configured such that a plurality of different types of machine learned models can be created with the toolset locally at the one or more client units. A further step is directed to receiving, from the one or more client units, one or more machine learned models, the one or more machine learned models being respectively created with the toolset and trained based and the local data by the client units. A further step is directed to store the one or more machine learned models in the central server unit.

In other words, instead of bringing the local data to the central server unit for developing a corresponding machine learned model, the means (i.e., algorithms, computer-implemented methods) for locally developing (creating) a machine learned model are brought to the local sites by ways of downloading an appropriate toolset. The resulting model is then uploaded to the central server unit where the uploaded machine learned models are stored at the central server unit essentially as they are (in particular, they not integrated into a master or shared machine learned model). As the central server unit serves a plurality of client units, this will result in a plurality of different machine learned models (with differing sites of origin) stored at the central server unit. Accordingly, it is an idea of the present invention to locally separate the administration of the machine learned models from the actual processes of generating, training, and updating. While the administration of the machine learned models in the system, i.e., archiving, distributing, monitoring, decisions triggering model initialization, deployment and updates, are controlled centrally by the central server unit, all the steps that involve local data, i.e., creating, training, and updating as such are carried out locally at the client units.

The central server unit may, in particular, relate to a web server. Further, the central server unit may be a cloud server or a local server. The client units may, in particular, relate to a local computer network at the local sites comprising one or more computing units. The local sites may, for instance, relate to healthcare environments or facilities such as hospitals, laboratories, practices, universities or associations of one or more of the aforesaid. In general, the central server unit is located outside of the local sites and serves one or more of the local sites from the outside.

The local data may relate to medical data of one or more patients. For instance, the local data may comprise laboratory test results and/or pathological data stemming from pathological imaging and/or medical imaging data generated by one or more medical imaging facilities such as computed tomography devices, a magnetic resonance system, an angiography (or C-arm X-ray) system, a positron-emission tomography system or the like and any combination thereof. Further, the local data may comprise supplementary information relating to a patient, such as diagnosis reports, information about administered treatments, information about symptoms and treatment responses, health progression and the like. Such information can be provided by ways of an electronic medical record (EMR), for instance. The local data may be stored locally in one or more databases of the client units. The databases may be part of hospital information systems (HIS), radiology information systems (RIS), clinical information systems (CIS), laboratory information systems (LIS) and/or cardiovascular information systems (CVIS), picture archiving and communicating systems (PACS) or the like. From these databases, the local data can be accessed locally for training machine learned models and the later regular use of the machine learned models after deployment. The local access of the training data and, in particular, the delivery of the local data to the machine learned model may be administered or controlled by the client units. In general, the local data cannot be accessed from the outside of the local sites. In particular, the local data cannot be accessed by the central server unit. The local data may be subject to data privacy regulations which may prohibit that the local data leaves the local sites. The local data may, in particular, comprise data sets with which a machine learned model can be trained, validated and tested. Data sets may comprise input data and associated output data which can be used to evaluate the performance of a machine learned model during supervised learning. The output data may be verified results corresponding to the input data. The output data may be generated and/or verified by a human based on the input data. For unsupervised learning, no output data is required. Further, the local data may comprise data outside of the data sets for training, validation and testing which is to be processed by the readily trained and deployed machine learned model during regular use.

The toolset being configured such that a plurality of different types of machine learned models can be derived from the toolset may mean that the toolset provides computer-implemented methods, computer program products, computer program elements, algorithms, computer code sequences and the like (subsequently also denoted as "building blocks") so that a trainable model can be initialized and trained based on the local data. To this end, the toolset may comprise a number of untrained and trainable machine learned algorithms. A machine learned model may be created based on one of the machine learned algorithms or based on a combination of two or more machine learned algorithms. According to an embodiment, the client units may be provided with the untrained and trainable machine learned algorithms as such. Thus, the provision of the toolset serving as a "container" for the machine learning algorithms and optionally comprising other auxiliary algorithms or "tools" is optional.

The toolset may optionally comprise functions for uploading the readily trained machine learned models to the central server unit and monitoring the performance of the deployed machine learned models (e.g., by ways of generating performance logs). As such, the toolset may comprise computer-implemented methods and algorithms, executable computer codes, computer-implemented routines for effecting the training as such, for evaluating the performance of the machine learned model (e.g., by ways of generating performance logs), for suitably converting the local data for the machine learned model, for one or more local data preprocessing steps, for compiling or interpreting computer code, locally installing and executing computer programs and the like. In other words, the toolset brings capabilities to the local sites to enable them to create a machine learned model "from scratch" based on the local training data, i.e., without starting off from an already functioning and/or trained machine learned model. Further, the toolset may be configured to provide computer-implemented means to the local sites enabling the (incremental) training and update of already existing machine learned models and the continuous performance monitoring (e.g., by ways of generating performance logs). Another word for the toolset may be pipeline or machine learning pipeline.

The provision of the toolset to the client units may comprise downloading the toolset to the client units by the central server unit. As an alternative, the toolset may be provided to the client units by locally installing it on the client units from a portable memory device such as a memory stick or a designated online repository such as a cloud storage portion outside of the central server unit.

A machine learned model is an already trained model which is fit for processing data according to the learned task. By contrast, the machine learning algorithms comprised in the toolset are untrained and trainable in the sense that they yet require training. The toolset as such and the comprised building blocks are therefore not configured to process the local data and fulfill a given task without training at the local sites by the respective client units.

The different types of machine learned models which can be created with the toolset (or from the machine learning algorithms) may relate to structurally and/or functionally and/or topologically different types or kinds or variants of machine learned models. As such, different types may rely on different structures or architectures. For instance, neural networks may comprise a layer structure, while random forest schemes comprise a decision tree structure. Further, the machine learned models creatable with untrained machine learning algorithms (either as comprised in the toolset or as provided to the client units as such) may fulfill different functions. While some may be configured for feature learning by processing image data, others may be configured to classify data or provide numerical predictions. Further, the machine learned models may differ with regards to the learning processes. For instance, one type of machine learned models may infer functions from using labeled data pairs by ways of supervised learning. Examples include various kinds of neural networks, decision trees, or Bayesian networks. Other types of machine learned networks derivable from the toolset may support unsupervised learning where previously unknown patters are found in data sets without pre-existing labels or semi-supervised learning. Examples include deep believe nets, hierarchical clustering, or k-means. In terms of machine learning paradigms, yet a third type of machine learning models relates to models supporting reinforcement learning which is concerned with how models ought to take actions in an environment so as to maximize some notion of cumulative reward. Examples include Q-learning or learning classifier systems. Furthermore, the machine learning models may differ with respect to different metrics optimized during the training process. For instance, for decision tress and tree-based methods in general, these metrics may include information gain, Gini impurity, gain ratio or accuracy.

A machine learned model, in general, may be seen as mapping input data to output data thereby fulfilling a certain learned task at the local sites. Machine learned models which can be created from the toolset (the machine learning algorithms) may be based on one or more neural networks (e.g., deep neural networks, recurrent neural networks, convolutional neural networks, convolutional deep neural networks, adversarial networks, deep adversarial networks and/or a generative adversarial networks etc.) and/or other algorithms including Bayesian networks, decision trees, random forest schemes, support vector machines, linear or logistic regression models, gradient averaging, k-means clustering, Q-learning, genetic algorithms and/or association rules or other suitable models and any combination of the aforesaid. Instead of the term "neural network" the term "neuronal net" can also be used. The output data generated by the machine learned models may depend on one or more parameters of the machine learned model. In general, a machine learned model may comprise a manifold of parameters. For instance, the parameters may relate to parameters deeply embedded in the machine learned model such as the weights in artificial neural networks. Further, the parameters may relate to "superordinate" parameters (often denoted as "hyperparameters") which govern the overall behavior and training of the model. Hyperparameters can be real-valued (e.g., learning rate, width of decision boundaries), integer-valued (e.g., number of layers), binary (e.g., whether to use early stopping or not), or categorical (e.g., choice of optimizer). One example for such hyperparameters would be the parameter "tree depth" in decision trees or random forests which controls the trade-off between achieving a low training error and a low testing error. In addition, the parameters may relate to the type and number of basic trainable algorithms combined to form the machine learned model. The one or more parameters of the machine learned model can be determined and/or be adjusted by training. The term "machine learned model" as used throughout the application relates to machine learned model which already underwent training, i.e., the parameters of which have already been determined and/or adjusted by training. By contrast, a trainable function or algorithm or model, i.e., a function or algorithm with one or more parameters not yet adjusted, will in general not be referred to as a machine learned model. A machine learned model may be generated from one or more trainable functions or algorithms during training. In this regard, one or more trainable algorithms may be combined upon training to form a machine learned model.

The determination and/or the adjustment of the one or more parameters of a machine learned model during training may occur during the initial creation of the machine learned model on the basis of the toolset (the machine learning functions) from scratch. It may further occur during later training of an already trained machine learned model, for instance during re-training or incremental machine learning. Other terms for trained machine learned model may be trained mapping specification, mapping specification with trained parameters, function with trained parameters, algorithm based on artificial intelligence, machine learned algorithm.

Training, in general, may be based on a pair made up of training input data and associated training output data as part of the local data. Subsequently, this part of the local data may also be denoted as local training data. A trainable model is applied to the training input data for creating model output data. In particular, the determination and/or the adjustment can be based on a comparison of the model output data and the training output data. With the training input and output data being part of the local data, training happens locally at the local sites. After training (performance evaluation and deployment), the machine learned model may process new unseen local data to locally generate output data according to what it has been trained for. Thus, the training may be seen as implicitly defining the field of application and/or the task the machine learned model has to fulfill.

The step of storing may be seen as a step of archiving the machine learned model in an appropriate repository or database of the central server unit such that the machine learned models may be retrieved from the repository for further use. For instance, the machine learned models may be stored according to their fields of application or local sites/client units of origin. The repository or database may comprise a plurality of different machine learned models.

The steps according to the first aspect preferably happen "server-side", i.e., at the central server unit, or are at least initiated by the central server unit. They may be complemented by corresponding "client-side" steps happening at the client units. These client-side steps may comprise: receiving, by a client unit, a toolset, the toolset being configured such that a plurality of different types of machine learned models can be derived from the toolset (the machine learning algorithms); deriving and training, by the client unit, a machine learned model or multiple models on the basis of the local data of the client unit and the toolset; uploading, by the client unit, the machine learned model to the central server unit.

The steps of deriving and training of an machine learned model from the toolset may also be denoted as learning phase of an machine learned model or creating an machine learned model (from the toolset from scratch).

In this regard, the step of creating and training may comprise selecting building blocks or combinations of building blocks from the toolset to build trainable models, training them to generate machine learned models and evaluating how they perform on the local data. This may involve generating a plurality of candidate machine learned models and comparing them on the basis of the local (training) data to decide about the best final machine learned model. To this end, cross-validation schemes may be used according to which the local training data is partitioned into a plurality of complementary subsets or folds. Training is performed on one subset (called the training set or training fold) and testing is performed on the other subset (called the testing set or fold). To reduce variability, multiple rounds of cross-validation may be performed using different partitions of the local training data, and the validation results are combined (e.g., averaged) over the different partitions to give an estimate of the machine learned model's predictive performance. If additional hyperparameters need to be optimized, nested cross validation schemes may be applied. Basically, these rely on (1) an inner cross-validation to tune the hyperparameters and select optimal hyperparameters, and (2) an outer cross validation used to evaluate the model trained using optimized hyperparameters as selected by the inner cross-validation. The routines and algorithms for locally conducting such cross-validation schemes at the client units may as well be comprised in the toolset.

The training as such may be based on supervised training, semi-supervised training, unsupervised training, reinforcement learning and/or active learning. Furthermore, representation learning (an alternative term is "feature learning") can be used. In particular, the parameters of the trained functions can be adapted iteratively by several steps of training. The corresponding building blocks for locally putting these methods into practice at the client units may likewise be comprised in the toolset.

In general, training at the client units is based on the local data, wherein the local data may comprise local training data, which, in turn, comprises training input data and associated training output data. Training may thus comprise training a trainable model and/or machine learned model based on the input training data and the output training data (by the client unit). Specifically, this may comprise determining model output data based on the trainable model and/or machine learned model and the training input data (by applying the trainable model and/or machine learned model to the training input data) and adjusting the trainable model and/or machine learned model based on a comparison of the model output data and the output training data (by the client unit).

Of note, the client-side steps may be selectively combined with the server-side steps. The resulting methods also define aspects according to the invention.

In summary, the above steps synergistically contribute to provide an effective machine learning procedure for serving a plurality of local sites according to their specific needs. Thereby, the method combines the ability of generating machine learned models that are specifically tailored according to the requirements of the local sites with guaranteed data privacy of the local data at the local site. Specifically, the provision of the toolset (or the number of untrained and trainable machine learning algorithms) to the local sites brings basic algorithms and, optionally, further computer-implemented methods to the local sites which enable to locally assemble, and train machine learned models from scratch. This has the immediate consequence that the ensuing machine learned model is specifically adapted to the local site. In that sense, the field of application or, in other words, the task the machine learned model has to fulfill, can entirely be defined by the local sites (either as explicit requirements or implicitly by the training procedure). By serving a plurality of sites, this concept automatically yields a multitude of different types of machine learned models which makes the method very versatile and applicable to a plethora of different problems in machine learning. All this is in clear contrast to other approaches of federated learning which rely on a readily trained master machine learned model which is distributed to the local sites where it is merely adapted to new local data. At the same time, the local training (which is facilitated by providing the toolsets to the local sites in the first place) makes it possible that the upload of local data to a central facility can be dispensed with. Accordingly, the method is applicable in environments in which, for privacy reasons, local data on no account may leave the site. Of note, also the step of receiving the machine learned models at central server unit synergistically contributes to the versatility of the method as this enables to store the machine learned models at the central server unit for later use. In contrast to other methods, the machine learned models received from the local sites are not integrated into a master model but stored "as they are". Since the method serves a plurality of sites each generating different machine learned models, this will gradually lead to the buildup of a repository or library of machine learned model that have been trained according to specific tasks.

According to an embodiment, the method further comprises the step of receiving, from one or more of the client units, configurational data and configuring the toolset (or the number of machine learning algorithms provided to the client units) according to the configurational data (prior to providing it to the one or more of the client units).

The configurational data may relate to the field of application a machine learned model is sought for by the one or more local sites and/or the one or more client units, to local limitations for generating a machine learned model at the local sites (such as computational limitations or cost limitations), to information about the respective local metadata (such as data formats, type, variables and amount of data), whether additional functions besides the machine learning algorithms are required (e.g., for carrying out training, validation and testing) and the like. The step of receiving may be complemented by generating the configurational data and/or communicating the configurational data to the central server unit by the respective one or more client units (e.g., by ways of an upload).

Forwarding configurational data of the local sites to the client units and tailoring the toolset (or the number of machine learning algorithms provided to the client units) accordingly has the benefit that the functions and algorithms supplied to the client units may be pre-selected according to the local configuration of the local sites. Accordingly, upon creating and training a machine learned model, a smaller number of possible combinations of algorithms and methods has to be validated and tested. This saves computational costs and may yield better results in shorter time.

According to an embodiment, the step of receiving comprises receiving associated information corresponding to the one or more machine learned models.

The associated information may generally relate to metadata associated to the machine learned model such as the local site of origin, the specific field of application, variables used by the model, information about the model creation, such as the training, validation and testing status, date, time and duration of model training, size of data used for training, info about potential warnings and issues occurred during training and potentially other information logged during training and deployment of the machine learned model. On the side of the client units this step may be complemented by generating the associated information and/or communicating the associated information to the central server unit (e.g., by ways of an upload). The associated information may either be appended to and/or included in the machine learned model and/or provided in the form of sperate files.

Forwarding associated information corresponding to the machine learned models has the benefit that the machine learned models may be administrated at the central server unit more purposefully for archiving and later use. In this respect, the step of storing may comprise storing the associated information alongside the respective machine learned model either together with the machine learned model or in a separate repository (at the central server unit).

According to an embodiment, the step of receiving may comprise assigning an unambiguous identifier to the machine learned model. On that basis the step of storing may comprise storing the machine learned model on the basis of the unique identifier.

The unique identifier may be an accession number or any other suitable electronic identifier with the help of which the corresponding machine learned model may be unambiguously identified within the central server unit. Preferably the unique identifier is furthermore indicative of the sites of origin of the respective machine learned model (in terms of both, the original generation from scratch as well as the further re-training, optimization and incremental learning of an existing machine learned model).

The assignment of a unique identifier is beneficial for administrating the machine learned models at the central server unit, for archiving and for later use. Preferably, any associated information is assigned the same unique identifier thereby unambiguously linking the associated information to the corresponding machine learned model.

According to an embodiment, the machine learned models received from the client units comprise incremental machine learned models the learning of which can be resumed by incremental machine learning.

In contrast to ordinary machine learned models, the incremental machine learned models are configured such that their training can be resumed. The corresponding process is called incremental learning or incremental machine learning. The ability to support incremental learning requires a specific class of machine learned models - the incremental machine learned models. This is because ordinary machine learned model irreversibly anneal to an optimal configuration during training. By consequence, they require a complete re-training if presented with new training data. During re-training such machine learned models "forget" the knowledge previously acquired on other training data. By contrast, incremental machine learned models are able to gradually adapt to new data without requiring complete re-training. In other words, such incremental machine learned models preserve previously acquired knowledge and are able to adopt new knowledge. Several trainable functions, algorithms and/or models inherently support incremental learning while others can be adapted to facilitate incremental learning. Examples of incrementally trainable algorithms, methods and models include decision trees, several artificial neural networks, stochastic gradient descent or Naive Bayes. An incremental machine learned model is thus based on trainable functions, algorithms and/or models (either provided via the toolset or directly as part of the machine learning algorithms) that support incremental learning which are combined and trained in a way that the incremental learning ability is retained.

The expression (incremental) machine learned model is meant to relate to "machine learned model and/or incremental machine learned model", if not indicated otherwise. Likewise, the mentioning of "machine learned model" is not to be construed as relating to "ordinary" machine learned models not supporting incremental machine learning but is meant to address both, machine learned models and incremental machine learned models, if not indicated otherwise.

As such, incremental machine learned models are very suitable for learning beyond the creation phase which enables to adapt to changing local data and even makes them usable across different sites. Thanks to their incremental learning abilities, incremental machine learned models become "scalable" in the sense that they can aggregate knowledge from plural separate training sessions and a plurality of sites. This has the benefit that incremental machine learned models after the creation phase usually require less training data to achieve reasonable results. This makes them applicably for sites with scarce local (training) data. Of note, the usage of incremental machine learned models is also beneficial if not distributed across sites. Due to their ability of resuming training, a significantly smaller data size must be processed during model updates when new local training data becomes available (as compared to ordinary machine learned models that require a complete re-training using both old and new local training data). This results in much faster and computational less expensive training. Further, since the "knowledge" acquired during training is only abstractly reflected in the parameters of the incremental machine learned models and, thus, detached from the specific local training data, incremental machine learned models offer a way to transfer knowledge in a federated learning environment in which the transfer of data is highly restricted. In other words, incremental machine learned models enable to implement incremental cross-site learning. With that, the incremental machine learned models are capable to capture a much wider range of patterns occurring in the respective field of application.

According to an embodiment the toolset comprises a plurality of different types of untrained and trainable machine learning algorithms.

"Untrained and trainable machine learning algorithms" (in short machine learning algorithms) relate to trainable functions, models, computer-implemented methods and algorithms which can be used to assemble (or create or derive or generate or produce) machine learned models (incremental machine learned models). Assembling may involve creating (candidate) trainable models from the toolset and training of the trainable machine learning algorithms. Thus, the trainable basic machine learning algorithms may be seen as the building blocks of the (incremental) machine learned models. A (incremental) machine learned model may be based on one or more of these building blocks. Importantly, the trainable machine learning algorithms are untrained and are, thus, not fit to process local data without being assembled into a model and appropriately trained. The provision of different types of trainable machine learning algorithms may mean the provision of conceptually different trainable machine learning algorithms and/or of machine learning algorithms which are based on the same concept but slightly adapted/varied. Similarly, the different trainable machine learning algorithms may have different or similar fields of applications. In this regard, the different trainable machine learning algorithms may comprise trainable machine learning algorithms with different decision boundaries, for instance. Specifically, the trainable machine learning algorithms may include (or may be based on) one or more trainable neural networks (e.g., deep neural networks, recurrent neural networks, convolutional neural networks, convolutional deep neural networks, adversarial networks, deep adversarial networks and/or a generative adversarial networks etc.) and/or other trainable algorithms including Bayesian networks, decision trees, random forest schemes, linear or logistic regression models, gradient averaging, k-means clustering, Qlearning, genetic algorithms and/or association rules or other suitable trainable algorithms.

The provision of a plurality of different, trainable machine learning algorithms has the benefit that a plethora of different types of (incremental) machine learned models can be locally assembled by the client units according to the specific needs at the corresponding sites. This makes the method very versatile and applicable to a plurality of different problems.

According to an embodiment, the untrained and trainable machine learning algorithms are configured (chosen) such that machine learning algorithms are excluded which memorize or record parts of the local data during training (and incorporate these in the model).

Several machine learning algorithms rely on incorporating parts of the local data as such in the readily trained machine learned model. This is the case for k-nearest neighbor algorithms or support vector machines. By excluding suchlike algorithms from the toolset (or from download to the local sites) data privacy of the local data can be further improved.

According to an embodiment, the toolset (and therewith the machine learning algorithms provided to the client units) may be occasionally updated once new machine learning algorithms become available. This has the benefit that the tools provided to the local client units for locally creating machine learned models can be kept up to date.

According to an embodiment, the trainable machine learning algorithms may be pre-selected by the central server unit on the basis of any configurational data as provided by one or more of the client units. The pre-selection has the benefit that a smaller number of trainable machine learning algorithms has to be considered in the learning phase of the machine learned model at the client units which save computation time and cost.

According to an embodiment, the method further comprises downloading, to the client units, cross-site machine learned models from the central server unit, which cross-site machine learned models have been trained at sites different from the site they are downloaded to.

This step may be complemented, at the side of the client units, by receiving the cross-site machine learned models at the client units. That followed the cross-site machine learned models may be deployed, tested for performance to generate corresponding performance logs and/or updated based on the local data of the client units the cross-site machine learned model has been downloaded to. Updating, in this regard, may relate to a complete (re-)training of the machine learned model and/or to resuming the training by incremental learning (if possible) and/or to tuning or adjusting (hyper-)parameters of the cross-site machine learned models. The updating may be based on local training data comprised in the local data. Further, updating may include any other adaptation of the (incremental) machine learned model other than training, such as an adaptation of data pre-processing steps or any structural adaptation of the (incremental) machine learned models to the local architecture.

Optionally, the locally updated cross-site machine learned model is uploaded to the central server unit (further optionally, including any associated information pertaining to the updated cross-site machine learned model) where it is received and archived as described before.

The download of cross-site machine learned models enables to leverage the shared knowledge of the system and at the same time respecting any data privacy regulations. This is because such cross-site deployment makes it possible to rely on models that have been proven useful for similar tasks or for the same task at a different site. This decreases the burden of the local client units to create own models from scratch - which may be difficult if the local data is scarce or if local constraints impose limitations on computing power or the available timeframe. To further increase the benefit in this regard, the cross-site machine learned models may be incremental machine learned models. Due to their ability of being further trained, they can accumulate knowledge from various sites and at the same time can be better adapted to the local sites by simply resuming their training on the available local data. This enables the incremental machine learned models to capture a much wider range of patterns that occur in the context of a problem that is being tackled. In any case, the optional upload of updated cross-site (incremental) machine learned model back to the central server unit is beneficial in that the "library" of incremental machine learned models disposable at the central server unit is further increased thereby broadening the shared knowledge for the entire system.

According to an embodiment, the step of downloading may be combined with a step of selecting a (incremental) machine learned model for download by the central server unit on the basis of further information about the local sites. The further information may comprise the configurational data or any other indication about the local requirements a machine learned model has to fulfill at the respective local sites (at the respective local client units). These requirements may relate to the prospective field of application or to one or more tasks a machine learned model has to fulfill locally, but also to structural requirements such as the local server or network architecture. The step of selecting may comprise querying an archive (such as a database or a model repository) of machine learned models on the basis of the further information and retrieving a (incremental) machine learned model matching the further information. This may mean that at least parts of the further information about the local sites and at least parts of the available information at the central server unit about the stores (incremental) machine learned models are matched. In other words, the step of matching identifies a conformity or compatibility measure between the requirements of the local sites (the client units) and an (incremental) machine learned model. Preferably, the step of matching identifies a plurality of conformity measures for a plurality of (incremental) machine learned models.

All of this has the benefit that an appropriate model can be selectively chosen as best fit for the respective local site which improves compatibility and performance.

According to an embodiment, the step of downloading may be complemented by the simultaneous download of an appropriate toolset and/or number of machine learned algorithms (to the same local site) and the aforementioned creation of a (incremental) machine learned model from scratch.

This has the advantage that a further (incremental) machine learned model becomes locally available which is site-specific and may be compared to the downloaded model in terms of performance. In doing so, the method provides for more leeway to choose the currently best (incremental) machine learned model for each local site. Of note, in machine learning, there is typically no "one size fits all" solution. Accordingly, certain site specificities can cause that site-specific models work better than even incrementally learned cross-site models. Further, if the newly created (incremental) machine learned model is uploaded to, received at, and archived by the central server unit as described before, the knowledge database in terms of (incremental) machine learned models of the system can be further increased. If an (incremental) machine learned model is "locally available" or "available" at a client unit or a local site, this may mean that it is currently deployed and/or stored locally, e.g., for later use or comparison.

According to an embodiment, the method further comprises the steps of receiving, from one or more of the client units, one or more updated machine learned models, the updated machine learned models being machine learned models updated locally by the client units based on respective local data of the client units, and storing the updated machine learned models in the central server unit.

At the client-side, i.e., at the client units, this step is complemented by a step of locally updating machine learned models on the basis of the respective local data.

The machine learned models may comprise incremental machine learned models. Updating may relate to a complete (re-)training of the (incremental) machine learned model and/or to resuming the training of an incremental machine learned model by incremental machine learning and/or to any other tuning or adjustment of (hyper-)parameters of the respective (incremental) machine learned model. The updating may be based on local training data comprised in the local data. Further, updating may include any other adaptation of the (incremental) machine learned model other than training, such as an adaptation of data pre-processing steps or any structural adaptation of the (incremental) machine learned models to the local architecture of the client units.

The upload of updated (incremental) machine learned models back to the central server unit is beneficial in that the "library" of (incremental) machine learned model disposable at the central server unit is further increased thereby broadening the shared knowledge for the entire system.

Optionally, the local update of the machine learned models at the client units may be triggered (or, in other words, controlled or initiated) by the central server unit, e.g., if the local data is updated or if a degradation in performance of an machine learned model is detected (either by the client units or the central server unit).

This has the benefit that model updates may be administrated centrally and initiated automatically, e.g., when a degradation in performance is detected. By consequence, there is no need for expensive regularly scheduled model updates as they are initiated when needed. In this regard, the central server unit may be further configured to imply predefined absolute and/or relative thresholds for performance degradation which may, e.g., be set based on the configuration data of the respective site.

As an alternative or in addition to that, the client units may initiate the step of updating on their own initiative, e.g., if the corresponding local data is updated.

According to an embodiment, the method may further comprise the step of distributing the one or more updated machine learned models to client units that use pre-updated versions of the respective one or more updated machine learned models. In other words, this comprises downloading the updated machine learned model to all client units that use previous versions of the respective one or more updated machine learned models.

This has the benefit that improvements to a family of (incremental) machine learned models made locally at one site may be tickled down to other sites using other (incremental) machine learned models of the same family. In this instance, the distributed updated (incremental) machine learned model may be compared with the currently used model in terms of performance and it may be decided which one is to be deployed.

According to an embodiment, the method further comprises the step of monitoring (or evaluating), by the central server unit, the performance of the (incremental) machine learned models at the client units in processing the respective local data of the corresponding one or more client units.

At the client-side, this step may be complemented by the step of reporting, by the respective client unit to the central server unit, the performance of one or more (incremental) machine learned models currently available at the client unit.

Monitoring the performance of the (incremental) machine learned models centrally at the central server unit has the benefit that an objective measure can be applied in terms of model performance throughout the system. Further, this makes it possible to detect any performance degradation early and initiate appropriate countermeasures.

According to an embodiment, the method further comprises the step of determining, by the central server unit, whether or not a respective one of the currently available (incremental) machine learned models at a respective one of the client units is to be deployed, wherein the step of determining is optionally based on the aforementioned step of monitoring (evaluating) the performance of the respective one of the currently available (incremental) machine learned models.

At the client-side, this step may be complemented by the step of deploying the respective one of the (incremental) machine learned models. "Being deployed" or "deploy" may mean that an (incremental) machine learned model, after having been trained on the local (training) data, is now regularly applied to the local data. Thereby the local data servers as input data for the (incremental) machine learned model which, in turn, maps this input data to output data according to learned task.

By outsourcing the decision to deploy to the central server unit, the decision is objectified. While the local client unit only sees those (incremental) machine learned models that are locally available, the central server unit has access to considerably more information. Accordingly, the decision whether or not to deploy a given model may be based on comparative results from local sites with similar local data and/or similar fields of application.

According to an embodiment, the method further comprises the step of triggering, by the central server unit, whether or not a respective one of the currently available (incremental) machine learned models at a respective one of the client units is to be updated, wherein the step of triggering is optionally based on the aforementioned step of monitoring (evaluating) the performance of the respective one of the currently available (incremental) machine learned models.

At the client-site, this may be complemented by the step of updating as mentioned and explained before.

This has the benefit that model updates may be administrated centrally and initiated automatically, e.g., when a degradation in performance is detected. By consequence, there is no need for expensive regularly scheduled model updates as they are initiated when needed.

According to an embodiment, the method further comprises the steps of receiving, from one or more of the client units, one or more performance logs locally generated at the one or more client units, each performance log being respectively indicative of how a respective machine learned model performs on the respective local data, and evaluating, at the central server unit, the performance of the respective machine learned models on the basis of the corresponding one or more performance logs.

At the client-side, these steps are complemented by the step of generating by a client unit, for one or more of the (incremental) machine learned models locally available at the client unit, a performance log, the performance log being indicative of how the one or more of the locally available (incremental) machine learned models perform on the local data of the client unit.

Optionally, the generation of the performance logs may be triggered (or, in other words, initiated or controlled) by the central server unit. This may be done event-based (e.g., upon receipt of an updated (incremental) machine learned model from a further local site or when an update of the local data is notified) and/or happen at regular intervals. As an alternative or in addition to that, the generation of the performance logs may also be initiated by the client units themselves.

The performance logs may, for instance, be generated by suitable performance evaluation schemes for (incremental) machine learned models. One example of a performance metric measured in such evaluation schemes would be the Area Under the ROC Curve (AUC), commonly used for evaluating binary classification models. Other examples rely on a calculation of the mean-squared error as used for models generating numeric output. As mentioned, also cross-validation schemes, such as the nested cross-validation, may be used for generating the performance logs with specific, task-dependent performance metrics.

Based on the performance logs, performance degradation can readily be detected, and appropriate countermeasures can be initiated. Due to the central performance evaluation through the central server unit, such measures are furthermore initiated only when necessary and any expensive and often-times unnecessary regular maintenance operations of the deployed (incremental) machine learned models can be dispensed with.

According to an embodiment, the aforementioned step of evaluating comprises: determining, on the basis of the performance logs, whether one or more of the machine learned model are to be deployed at a corresponding client unit, and, optionally, initiating the corresponding deployment; and/or determining, on the basis of the performance logs, whether one or more of the machine learned models are to be updated locally by a corresponding client unit to generate corresponding updated machine learned models, and, optionally initiating the corresponding update, and/or determining, on the basis of the performance logs, whether one or more machine learned models are to be downloaded from the central server unit to one or more client units, and/or comparing, on the basis of the performance logs, a plurality of machine learned models available at a corresponding client unit, and/or determining, on the basis of the performance logs the value of the local data at a corresponding client unit.

Of note, the aforementioned steps happen server-side, i.e., are carried out by the central server unit. They may be complemented, at the client side by the aforementioned steps of deploying, receiving and updating (as carried out by the respective client unit).

As mentioned, the central decision-making concerning model updates, further model downloads, and model deployment has the advantage that a full service can be provided to the local sites after having enrolled with the method. What is more, the centralization of these tasks objectifies the decisions taken and enables that a plurality of different (incremental) machine learned models may be effectively administrated and distributed to a plurality of local sites. In doing so, the knowledge in terms of processing local data can be shared between the participating local sites while the local data as such remains at the sites all the time.

Further, this enables to compare (incremental) machine learned models that are locally available at a given site with each other which ensures that the currently best performing (incremental) machine learned model is selected for deployment. Yet, the (incremental) machine learned models which currently underperform may be held available for later challenging the deployed (incremental) machine learned model. This concept is also referred to as "champion-challenger-concept".

Moreover, central performance monitoring brings about the advantage that an objective measure for the value of the local (training) data can be introduced in terms of potential performance improvements. "Value" in this regard may be interpreted as computational as well as commercial value. Regarding the latter, local sites often ask for a price to pay for data-access rights. Whether or not this asking price is justified is often a matter of gut-feeling of the (human) decision-makers, however. Moreover, a thorough investigation of the local data before using it is hampered by data privacy regulations which, for instance, forbid copying them for inspection. In this respect, the method allows for an approach according to which the potential performance increase of the (incremental) machine learned models may evaluated before the corresponding (incremental) machine learned models are adopted by the system by uploading it to the central server unit. As the price for data-access rights typically becomes due only once the (incremental) machine learned model is uploaded, this makes it possible to re-negotiate or refrain from uploading the corresponding (incremental) machine learned model and paying the stipulated price altogether.

According to an embodiment, the toolset further comprises algorithms for generating one or more performance logs by the client units based on the respective local data, the performance logs being respectively indicative of how a respective machine learned model performs on the respective local data. As an alternative these algorithms may as well provided to the client units outside of the toolset (just like the machine learning algorithms).

Algorithms for generating performance logs may relate to computer-implemented methods, computer program products, computer program elements, algorithms, computer code sequences and the like which enable to generate performance logs locally at the client units.

In this context, it should be noted that the generation of performance logs often requires non-standard procedures that need to be adapted to both the specific (incremental) machine learned model, the local sites, and the available data at hand. What is more, training, validation and testing is often interlinked in terms of dedicated validation schemes. Hence, it cannot always be assumed that the client units are by default capable of drawing up an appropriate performance log. By providing corresponding procedures and algorithms to the client units by ways of the toolset, the client units are automatically enabled to appropriately quantify the model performance which fosters the seamless integration of a plurality of local cites into the system.

According to an embodiment, the generation of a performance log for an incremental machine learned models involves the steps of partitioning the local data into a plurality of folds, performing one or more cross-validating operations across the folds to obtain a performance log indicative of how the incremental machine learned model performs on the respective local data, wherein the cross-validating operations involve the continuous further training of the incremental machine learned model by incremental machine learning.

A fold is, in other words, a partition or part of the local data. Each fold comprises one or more individual data sets of the local data.

The embodiment addresses the problem that known methods for training and performance evaluation, such as the aforementioned cross-validation and nested cross-validation schemes, are not suited for incremental machine learned models - or at least do not live up to the full potential of incremental machine learned models. This is because every iteration in cross-validation usually requires the complete re-training of the candidate machine learned model under consideration. This is acceptable as long as the amount of local (training) data is sufficiently large. However, such procedure might amount to a more serious issue, if the local data is scarce or if incremental machine learned models shall be deployed across a plurality of local sites - as is the case for several embodiments according to the invention. This is because, at each instance of traditional cross-validation, the machine learned model "forgets" the previously acquired knowledge due to complete re-training. By implementing a cross-validation scheme that supports the continuous incremental learning of the incremental machine learned model under consideration, this problem is solved.

Specifically, the step of performing may further comprise determining one or more optimized hyperparameters of the incremental machine learned model by further training the incremental machine learned model using a first subset of folds, recording a partial performance log by testing the resulting incremental machine learned model with the one or more optimized hyperparameters on a second subset of folds different than the first subset of folds, and repeating the steps of determining and generating for one or more permutations of the first and second subsets across the folds, wherein the incremental machine learned model is being continuously further trained from permutation to permutation and the partial performance logs associated to each permutation are recorded, and the performance log is generated on the basis of the partial performance logs. Optionally, the partial performance logs may be averaged to generate the performance log.

A "subset" may generally comprise one or more folds, wherein the first subset preferably comprises two or more folds. In other words, one or more folds may be mapped to a subset. First and second subset together may comprise all of the folds or only a fraction of the folds of the local data. A "permutation" may be conceived as a rearrangement/reassignment of the folds to the first and second subsets. In other words, permutations differ in the mapping of the folds to the first and second subsets, wherein the initial mapping may be seen as first permutation in this regard. For instance, if the local data is partitioned into five folds S, D, F, G, and H, a first permutation may be formed by mapping folds S and D to the first subset and fold F to the second subset. A subsequent permutation may comprise mapping folds D and F to the first subset and fold G to the second subset and so forth. In particular, the one or more permutations may comprise all possible permutations (rearrangements) without repetition. This has the advantage that a maximal number of data combinations is sampled which increases both model performance and accuracy of the performance estimate. Since hyperparameter optimization is carried out on the first subset, in other words, training and validation for finding optimal hyperparameters is carried out on the first subset. To this end, one of the folds in the first subsets may serve as training fold and one may serve as validation fold. Testing for estimating the performance of the ensuing model is carried out on the second subset (which may thus be conceived as providing a testing fold). The step of determining one or more optimized hyperparameters does preferably not involve permutating the folds in the first subset but relies on the permutation as determined during the step of repeating.

The above steps enable to take hyperparameters of the incremental machine learned model into account, which generally improves the performance of the resulting (updated incremental machine learned model). Since hyperparameter tuning and performance evaluation are performed on separated folds, an unbiased, i.e., conservative estimate about the performance of the incremental machine learned model is obtained. Of note, the proposed scheme of permutations differs from traditional schemes as used in nested cross-validation which usually relies on an inner cross-validation loop and an outer cross-validation loop each requiring the permutation of folds. In other words, this results in a two-fold permutation. By relying on the ability of incremental machine learned models to resume training, this can be dispensed with and replaced by a rolling validation which is faster and still yields comparable results.

As mentioned previously, performance evaluation and training of (incremental) machine learned models is often interlinked. This has the effect that several known (cross-)validation schemes create a (incremental) machine learned model and an indication about its performance at the same time. Technically, this is due to the fact that model performance needs to be evaluated anyway to select the best version for the (incremental) machine learned model. The same holds true for the above embodiment dealing with a cross-validation scheme specifically adapted to incremental machine learned models. Since the incremental machine learned model is continuously trained according to the above steps, at the end of the procedure, an updated incremental machine learned model results which corresponds to the generated performance log.

According to an embodiment, the method further comprises the step of receiving, from at least one of the client units, a configuration file locally generated at the client unit corresponding to a (incremental) machine learned model available at the client unit, each configuration file being respectively indicative of the local configuration of the corresponding (incremental) machine learned model, and storing the configuration files at the central server unit.

At the client-side, this step may be complemented by the steps of generating, by the client unit, a configuration file corresponding to a (incremental) machine learned model locally available at the client unit and, optionally, communicating the configuration file to the central server unit.

The configuration file may contain associated information in connection with the corresponding (incremental) machine learned model. The configuration file may comprise information about the pre-processing steps required to feed the local data into the (incremental) machine learned model. Further, the configuration may comprise information about (hyper-)parameters of the (incremental) machine learned model. Moreover, the configuration file may comprise variable names, e.g., in the form of a list of variables as used by the (incremental) machine learned model.

Forwarding and archiving the configuration file alongside the (incremental) machine learned model makes it easier to redistribute a (incremental) machine learned model to different sites. With the help of the variable names, for instance, a (incremental) machine learned model to be downloaded can be readily mapped to a new side, e.g., by generating a variable correspondence table.

According to an aspect, a method for locally cross-validating incremental machine learned models in a system comprising a plurality of client units is provided, wherein the client units are respectively located at different local sites and respectively comprise local data. Thereby, the incremental machine learned models are machine learned models the learning of which can be resumed by incremental machine learning. The method comprises a plurality of steps. One of the steps is directed to providing, to one or more of the client units, an incremental machine learned model. Another step is directed to partitioning, at the one or more client units, the local data into a plurality of folds. A further step is directed to performing one or more cross-validating operations across the folds to obtain an updated incremental machine learned model and an associated performance log indicative of how the updated incremental machine learned model performs on the respective local data of the one or more client units, wherein the cross-validating operations involve the continuous further training of the incremental machine learned model.

As mentioned, by implementing a cross-validation scheme that supports the continuous incremental learning of incremental machine learned models, the knowledge already contained in the incremental machine learned models by ways of previous training can be preserved upon adapting (further training) the incremental machine learned model to the new local data. At the same time, a meaningful estimate of the model performance can be generated in terms of the associated performance log.

As mentioned, the step of providing may involve downloading the incremental machine learned model to the one or more local sites, e.g., from a central repository of a central server unit. Further the incremental machine learned model may be characterized in that they have been trained at sites different to the one or more sites (to which they are now provid-ed/downloaded).

According to an embodiment, the step of performing one or more cross-validating operations across the folds further comprises determining a set of optimized hyperparameters of the incremental machine learned model by further training the incremental machine learned model using a first subset of folds, recording a partial performance log by testing the resulting incremental machine learned model with a set of optimized hyperparameters on a second subset of folds different than the first subset of folds, and repeating the steps of determining and generating for permutations of the first and second subsets across the folds, wherein the incremental machine learned model is being continuously further trained from permutation to permutation to generate the updated machine learned model, and the partial performance logs associated to each permutation are recorded, and the performance log is generated on the basis of the recorded partial performance logs.

The above steps may be seen as relating to an outer loop of the method. Preferably, the step of determining optimized hyperparameters is without further permutating the folds in the first subset of folds.

As mentioned, the above embodiment makes allowance for hyperparameter-tuning of the incremental machine learned model, which improves the performance of the resulting (updated) incremental machine learned model.

Specifically, the step of determining the set of optimized hyperparameters may comprise: further training the incremental machine learned model for a first set of values for the set of hyperparameters on a first fold of the first subset of folds by incremental machine learning, determining the hyperparameter performance of the resulting incremental machine learned model on a second fold of the first subset different than the first fold, repeating the steps of further training and determining the hyperparameter performance for further sets of values of the set of hyperparameters on the first and second folds, and determining an optimized set of values for the set of hyperparameters on the basis of the hyperparameter performance so as to generate a corresponding set of optimized hyperparameters.

The steps comprised in determining the set of optimized hyperparameters may be conceived as an inner loop of the method for locally cross-validating incremental machine learned models. Since the repetition of the steps of further training and determining the hyperparameter performance is likewise based on "the" first fold and "the" second fold no further permutation takes place in this inner loop. The set of hyperparameters may comprise one or more hyperparameters.

In other words, a cross-validation method for incremental machine learned models the training of which can be resumed by incremental machine learning is provided, which method comprises the steps of: providing data for performing the cross-validation; partitioning the data into a plurality of folds; defining an outer cross-validation loop and an inner cross-validation loop nested with the outer cross-validation loop so that for each iteration of the outer loop multiple iterations of the inner loop are carried out; selecting, in each iteration of the outer loop, from the plurality of folds, a first fold, a second fold different to the first fold, and a third fold different to the first and second folds, so that first, second and third folds are permutated across the folds over the iterations of the outer loop; determining, in each iteration of the outer loop, a set of optimized hyperparameters of the incremental machine learned model on the basis of multiple iterations of the inner loop each iteration of the inner loop using the first fold for the further training the incremental machine learned model by incremental machine learning and the second fold for validating the corresponding results; and an indication of the performance of the corresponding incremental machine learned model with optimized hyperparameters using the third fold.

According to an aspect, a computer-implemented method for client-specific federated learning in a system comprising a plurality of client computing devices and a central server unit is provided. The client units are respectively located at different local sites and respectively comprise local data. The method comprises a plurality of steps. One step is directed to receiving, by at least a client unit, a toolset being configured such that a plurality of different types of machine learned models can be derived from the toolset. Another step is directed to deriving and training, by at least one client unit, a machine learned model on the basis of its local data and the toolset. A further step is directed to communicating, by the at least one client unit, the machine learned model to the central server unit.

According to an aspect, a computer-implemented method for client-specific federated learning in a system comprising a central server unit and a plurality of client units is provided. The client units are respectively located at different local sites and respectively comprise local data. The method comprises several steps. A first step is directed to providing, to one or more client units, a toolset, the toolset being configured such that a plurality of different types of machine learned models can be derived from the toolset. A further step is directed to receiving, at the one or more client units, the toolset. A further step is directed to generating, at the one or more client units, one or more machine learned models on the basis of the toolset and the respective local data. A further step is directed to uploading, by the one or more client units, the one or more generated machine learned models to the central server unit. A further step is directed to store the uploaded machine learned models in the central server unit.

According to an aspect, a central server unit for client-specific federated learning in a system comprising a plurality of client units is provided. Thereby, the client units are respectively located at different local sites. Further, local data is respectively stored at the client units. The central server unit comprises an interface unit, a computing unit and a memory unit. The interface unit is configured to communicate with the client units. The computing unit is configured to provide, to the client units via the interface unit, a toolset, the toolset being configured such that a plurality of different types of machine learned models can be derived from the toolset. The computing unit is further configured to receive, from the client units via the interface unit, machine learned models, the machine learned models being respectively derived from the toolset and trained based and the local data by the client units, and to store the received machine learned models in the memory unit.

The computing unit can be realized as a data processing system or as a part of a data processing system. Such a data processing system can, for example, comprise a cloud-computing system, a computer network, a computer, a workstation and the like. The computing unit can comprise hardware and/or software. The hardware can be, for example, a processor system, a memory system and combinations thereof. The hardware can be configurable by the software and/or be operable by the software. Generally, all units, sub-units or modules of the computing unit may at least temporarily be in data exchange with each other, e.g., via a network connection or respective interfaces. Consequently, individual sub-units of the computing unit may be located apart from each other.

The interface unit may be configured to communicate over one or more connections or buses. The interface unit may be embodied by a gateway or other connection to a network (such as an Ethernet port or WLAN interface). The network may be realized as local area network (LAN), e.g., an intranet, ethernet or a wide area network (WAN), e.g., the internet. The network may comprise a combination of the different network types. According to an embodiment, the network connection may also be wireless.

The memory unit may be realized as a cloud storage. Alternatively, the memory unit may be realized as a local or spread storage. The memory unit may comprise a plurality of individual repositories and/or databases.

According to an embodiment, the central server unit is adapted to implement the methods according to aspects of the invention for client-specific federated learning in a system comprising a plurality of client units. The computing unit may comprise a control unit configured to control the download of (incremental) machine learned models and/or toolsets to the client units via the interface unit. The control unit may be further configured to receive, from the client units via the interface unit, machine learned models and to archive (or store) the received machine learned models in the memory unit. The control unit may be further configured to control the download of the toolsets and (incremental) machine learned models to the client units and/or to process any data uploaded from the client units (i.e., (incremental) machine learned models, configuration files and/or performance logs), e.g., for storing or archiving the data in the memory unit. The control unit may further be configured for querying and retrieving of data (i.e., (incremental) machine learned models, configuration files and/or performance logs) from the memory unit according to one or of the method steps as set out above.

The computing unit may further comprise a performance monitoring unit configured to monitor and/or evaluate the performance of the (incremental) machine learned models at the local sites. To this end, the performance monitoring unit may be configured to evaluate performance logs received for the (incremental) machine learned models deployed and/or otherwise available at the local sites. On the basis of the performance monitoring and/or evaluation, the performance monitoring unit may be further configured to trigger the update of one or more (incremental) machine learned models at one or more local sites and/or to trigger the download and/or deployment of one or more (incremental) machine learned models from the memory unit to one or more of the local sites. Further, the performance monitoring unit may be configured to apply the aforementioned champion-challenger concept.

According to an embodiment, the central server unit may comprise a supervisory module configured to allow users to review, supervise, intervene and/or adapt the computer implemented method steps being executed at the central server unit (and/or to supervise the computing unit of the central server unit). The supervisory module may comprise one or more user interfaces. The user interfaces may be embodied by one or more display devices and input units, e.g., in the form of one or more computer workplace, workstation, PC, laptop or tablet computer and any combination thereof.

The provision of a supervisory module for supervising the computing unit by a user has the advantage that a user can readily follow and intervene any steps as carried out by the central server unit. For instance, the supervisory module may be configured so that a user may manually adapt the (incremental) machine learned models to be downloaded from the memory unit to the client units in order to ensure that the (incremental) machine learned models are executable at the local sites. To this end, the user may be given the opportunity to change variable names and/or adapt other functionalities of the (incremental) machine learned models. Further, the supervisory module may be configured to provide the user the opportunity to review performance logs and decide about the deployment of a given (incremental) machine learned model or the value of the local data at one or more of the local sites on that basis. In this regard, the user might also be provided with the right to overrule automatically generated decisions of the computing unit by the supervisory module.

According to an embodiment, the memory unit stores a plurality of different (incremental) machine learned models respectively generated and trained at different local sites (or comprises a repository storing a plurality of different (incremental) machine learned models respectively generated and trained at different local sites).

In other words, the central server unit thus comprises an archive of (incremental) machine learned models which may be embodied by a designated model repository. Such archive may be seen as knowledge database which accumulates the knowledge about evaluating a plethora of different local data sets in a heterogeneous environment of many different local client units in the form of readily trained (incremental) machine learned models. This has the benefit that a plurality (incremental) machine learned models are held available for deployment at the local sites if necessary. In this regard, the memory unit may be configured such that the (incremental) machine learned models are archived according to specific characteristics (such as the field of application, the type of local data compatible, local system requirements, model performance, monetary value, deployment and training history and the like). This makes it possible to readily query and retrieve a (incremental) machine learned model from the memory unit on the basis of the characteristics, if a (incremental) machine learned model needs to be found the characteristics of which meet the requirements for downloading and/or deploying it at one or more of the local sites. In that sense, the step of downloading may then comprise the steps of determining the requirements, a (incremental) machine learned model has to fulfill at the one or more client units, retrieving one or more (incremental) machine learned models from the memory unit on the basis of the requirements by matching the requirements to the characteristics of the (incremental) machine learned models stored in the memory unit.

According to an embodiment, the memory unit comprises (maintains) an archive of the building blocks of the toolset. These building blocks may be a plurality of different trainable machine learning algorithms and/or computer-implemented methods and algorithms, executable computer codes, computer-implemented routines for effecting the training of machine learned models as such, for evaluating the performance of the machine learned models (e.g., by ways of generating performance logs), for suitably converting the local data for the machine learned model, for one or more local data preprocessing steps, for compiling computer code, locally installing and executing computer programs and the like. The archive may be embodied by a designated repository (which is also denoted as algorithm repository in the framework of this application).

According to an embodiment, the computing unit is further configured to assemble (or configure) the toolset on the basis of the archive (e.g., by querying the archive for appropriate building blocks to assemble the toolset, e.g., on the basis of configurational data received from the client units). As an alternative, it may be configured to select the functions and algorithms for providing (downloading) them to the client units without formally integrating them into a toolset.

According to a further aspect, the present invention is directed to a client unit comprising a client interface unit configured to communicate with a central server unit, a local memory unit, and a client computing unit. Thereby, the local memory unit is configured to store local data. The client computing unit is configured to receive, from a central server unit, a number of machine learning algorithms via the client interface unit, to develop and train a machine learned model on the basis of the local data and the number of machine learning algorithms, and to upload the machine learned model to the central server unit via the client interface unit.

According to a further aspect, the present invention is directed to a system comprising a central server unit and one or more client units respectively located at different local sites. The central server unit comprises an interface unit, a computing unit and a memory unit. The one or more client units respectively comprise a client interface unit, a local memory unit, and a client computing unit. The interface unit is configured to communicate to the one or more client units via the respective client interface units. The client interface units are respectively configured to communicate with the central server unit via the interface unit. Thereby, the respective local memory units are configured to respectively store local data. The computing unit is configured to provide, to the client units, via the interface unit, one or more toolsets, the toolsets being respectively configured such that a plurality of different types of machine learned models can be derived from the toolsets. The respective client computing units are configured to receive, via the respective client interface units, the toolset, and to generate a machine learned model on the basis of the one or more toolsets and the respective local data. The respective client computing units are further configured to upload the respective machine learned models to the central server unit via the client interface units. The computing unit is further configured to receive, from the client units via the interface unit, the machine learned models, and to store the received machine learned models in the memory unit.

According to another aspect, the present invention is directed to a computer program product comprising program elements which induce a computing unit of a system for quantifying a medical image volume to perform the steps according to the above method, when the program elements are loaded into a memory of the computing unit.

According to another aspect, the present invention is directed to a computer-readable medium on which program elements are stored that are readable and executable by a computing unit of a system for quantifying a medical image volume, in order to perform steps of the inventive method, when the program elements are executed by the computing unit.

The realization of the invention by a computer program product and/or a computer-readable medium has the advantage that already existing providing systems can be easily adopted by software updates in order to work as proposed by the invention.

The computer program product can be, for example, a computer program or comprise another element next to the computer program as such. This other element can be hardware, e.g., a memory device, on which the computer program is stored, a hardware key for using the computer program and the like, and/or software, e.g., a documentation or a software key for using the computer program. The computer program product may further comprise development material, a runtime system and/or databases or libraries. The computer program product may be distributed among several computer instances.

Characteristics, features and advantages of the above described invention, as well as the manner they are achieved, become clearer and more understandable in the light of the following description and embodiments, which will be described in detail with respect to the figures. This following description does not limit the invention on the contained embodiments. Same components or parts can be labeled with the same reference signs in different figures. In general, the figures are not drawn to scale. In the following:
- Figure 1: depicts a system for client-specific federated learning according to an embodiment,
- Figure 2A: depicts a flowchart illustrating a method for client-specific federated learning according to an embodiment,
- Figure 2B: graphically illustrates the corresponding interactions between the central server unit and the client units,
- Figure 3A: depicts a flowchart illustrating a method for client-specific federated learning according to an embodiment,
- Figure 3B: graphically illustrates the corresponding interactions between the central server unit and the client units,
- Figure 4A: depicts a flowchart illustrating a first method for client-specific federated learning according to an embodiment,
- Figure 4B: graphically illustrates the corresponding interactions between the central server unit and the client units,
- Figure 5A: depicts a cross-validation method for incremental machine learned models in a system for client-specific federated learning according to the invention, and
- Figure 5B: graphically illustrates an example of how local data can be split when carrying out the cross-validation method.

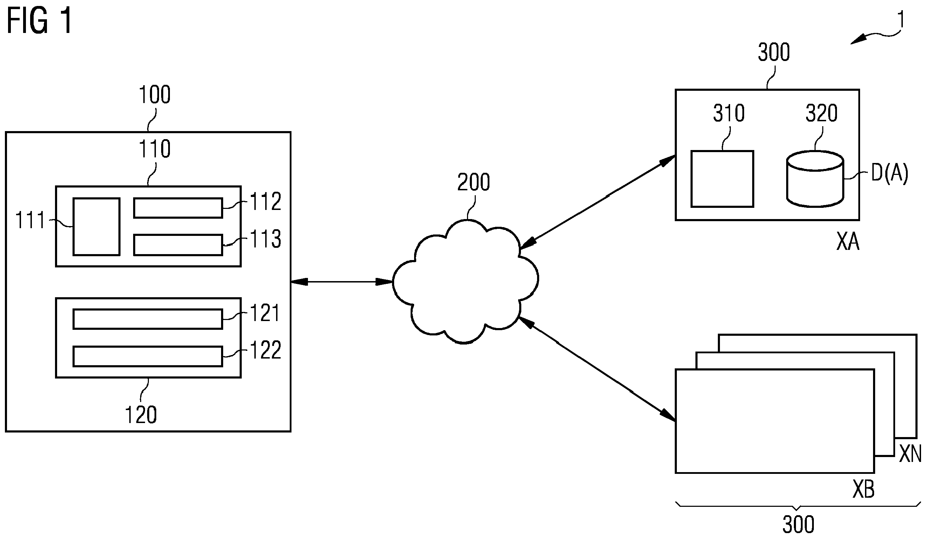

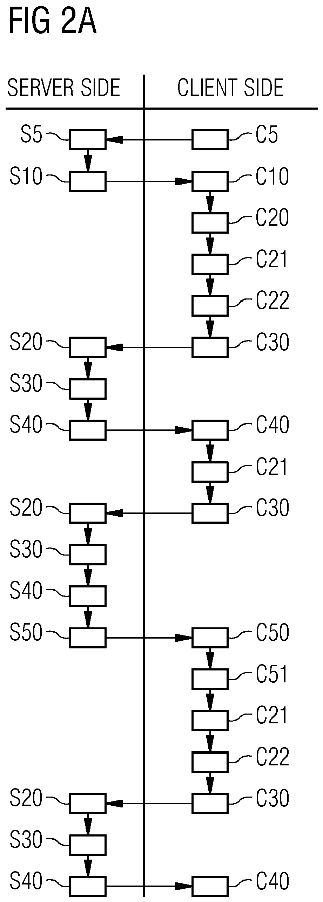

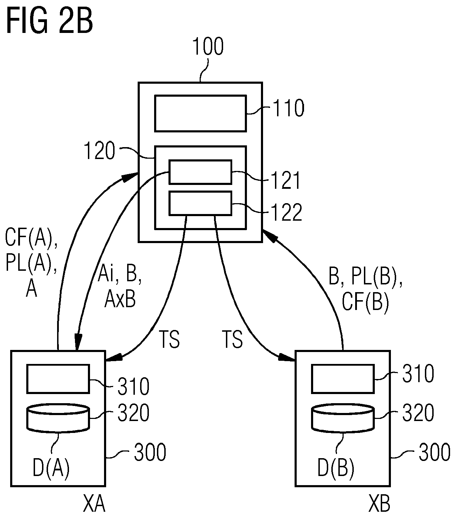

Figure 1 depicts an example system 1 for client-specific federated learning capable of creating, training, updating, distributing, monitoring and, generally, administrating a plurality of machine learned models A, B, Ai, Bi, BixA, Ai*, A2,... in an environment comprising a plurality of local sites XA...XN. System 1 is adapted to perform the method according to one or more embodiments, e.g., as further described with reference to Figures 2 to 5.

System 1 comprises a central server unit 100 and a plurality of client units 300 respectively located at the different local sites XA...XN. Central server unit 100 and client units 300 are interfaced via a network 200. The central server unit 100 is generally configured to control, coordinate and steer the federated learning procedures in system 1. The federated learning procedures may comprise creating, training, updating, distributing, deploying, monitoring and, generally, administrating the machine learned models A, B, Ai, Bi, BixA, Ai*, A2,... at the client units 300. The local sites XA...XN may, for instance, relate to clinical or medical environments, such as hospitals or hospital groups, laboratories, medical image centers, clinics or practices.

The machine learned models may be seen as mimicking cognitive functions that humans associate with other human minds. In system 1, such functions may relate to medical diagnosis, outcome prediction, the generation of findings in medical image data, the annotation of medical images, e.g., in terms of orientations or landmark detection, the generation of medical reports and the like. The machine learned models are enabled to fulfill these functions by being generated from one or more basic trainable machine learning algorithms and being trained based on local data D(A), D(B) at the sites XA...XN. With that, the machine learned models are able to adapt to new circumstances and to detect and extrapolate patterns and thereby fulfill a given task at the local sites XA...XN.

Central server unit 100 may be a web server, for instance. Further, the central server unit 100 may be a cloud server or a local server. Central server unit 100 may be implemented using any suitable computing device(s). Central server unit 100 may have a computing unit 110 and a memory unit 120.

The computing unit 110 may comprise one or more processors and a working storage. The one or more processor(s) may include, for example, one or more central processing units (CPUs), graphics processing units (GPUs), and/or other processing devices. Computing unit 110 may further comprise a micro-controller or an integrated circuit. Alternatively, computing unit 110 may comprise a real or virtual group of computers like a so called 'cluster' or 'cloud'. The working storage may include one or more computer-readable media such as a RAM for temporally loading data, e.g., data from the memory unit or data uploaded from the client units 300. The working storage may further store information accessible by the one or more processors, including instructions that can be executed by the one or more processors. The instructions can include instructions for implementing the download of toolsets and/or machine learning algorithms and/or machine learned models to the client units 300, reviewing the performance of the machine learned models available at the respective sites XA...XN, archiving the uploaded machine learned models, and/or initiating local updates of the machine learned models. Central server unit 100 may be implemented using one server device or a plurality of server devices. In implementations in which a plurality of server devices is used, such plurality of devices can operate according to a parallel computing architecture, a sequential computing architecture, or a combination thereof. Central server unit 100 may further include an interface unit (not shown) for communication with the client units 300 over network 200. The interface unit can include any suitable components for interfacing with one or more networks, including, for example, transmitters, receivers, ports, controllers, antennas, or other suitable components.

Memory unit 120 may be realized as a cloud storage. Alternatively, memory unit 120 may be realized as a local or spread storage within the premises of the central server unit 100. Memory unit 120 may comprise one or more memory devices. A plurality of repositories or databases may be configured in memory unit 120. One may be a model repository 121 configured to store or archive a plurality of machine learned models A, B, Ai, Bi, BixA, Ai*, A2,.... Machine learned models may be brought into a storable format by appropriately translating data structures or objects states of the machine learned models (a process which is known as "serialization"). For instance, the programming language Python provides the "pickle"-standard library module in this regard. As an alternative, the machine learned models may be archived in the form of DLL-files.

Further, model repository 121 may be configured to store associated information for each machine learned model. The associated information may generally relate to metadata pertaining to the respective model. Such metadata may, for instance, comprise the intended use or field of application of the respective model, the origin of the respective model (i.e., at which sites the model has been generated and/or trained), system or data requirements or the like. In other words, model repository 121 may thus be conceived as a library in which a plurality of machine learned models are archived and from which the machine learned models may be retrieved according to their field of application, performance, origin and the like (or, in more general terms, according to their characteristics).

Further associated information may relate to the performance metrics the machine learned models achieved at the various sites XA...XB. This piece of associated information is preferably stored in the form of performance logs PL(A), PL(B), PL(Ai), PL(Bi), PL(BixA), PL(Ai*), PL(A2),.... Accordingly, for each machine learned model one or more performance logs PL(A), PL(B), PL(Ai), PL(Bi), PL(BixA), PL(Ai*), PL(A2),... may exist which may be likewise archived in model repository 121. Moreover, the associated information may comprise configuration files CF(A), CF(B), CF(Ai), CF(Bi), CF(BixA), CF(Ai*), CF(A2),... indicative, e.g., of preprocessing steps required for making local data D(A), D(B) compatible to a respective machine learned model or optimal (hyper-)parameters of the respective machine learned model as identified upon the (local) validation of the machine learned model. Like the performance logs PL(A), PL(B), PL(Ai),..., the configuration files CF(A), CF(B), CF(Ai), CF(Bi), CF(BixA), CF(Ai*), CF(A2),... may be stored in model repository 121 alongside the respective machine learned models. Further the associated information may pertain to other log files containing model training, validation and testing status information, such as date, time and duration of model training, size of data used for training, info about potential warnings and issues occurred during training and potentially other log information. The associated information may be directly appended or adhered to the machine learned model files as metadata. Further, as mentioned, the associated information may be stored alongside the machine learned models in model repository 121. In addition to that or as an alternative, any associated information such as the configuration files CF(A), CF(B), CF(Ai), CF(Bi), CF(BixA), CF(Ai*), CF(A2),... or the performance logs PL(A), PL(B), PL(Ai), PL(Bi), PL(BixA), PL(Ai*) , PL(A2),.... may be stored separate from the machine learned models in designated repositories. In general, machine learned models may be linked to their corresponding associated information using unique (electronic) identifiers such as accession number, machine learned model-IDs or the like. In summary, the associated information may thus be seen as summing up the characteristics of the corresponding machine learned model in model repository 121.

Another repository within the memory unit 120 may relate to an algorithm repository 122 for storing trainable machine learning algorithms, executable computer code, routines, methods and other building blocks (subsequently also denoted as "tools") that can be used for creating (or assembling) machine learned model at the local sites XA...XN (from scratch) . Like the machine learned models, these entries may be brought into a storable format by serialization. Unlike the machine learned models, the tools do not relate to already trained or learned models, however. Rather, the tools may be combined to form one or more "toolsets" TS or pipeline configured for the local generation/assembly of one or more machine learned models at the local sites XA...XN using the computational power and the local data D(A), D(B) at the local sites XA...XN. Accordingly, the toolsets TS are configured such that they contain all components for enabling the local sites XA...XN to assemble a machine learned model on the basis of the local data D(A), D(B). A toolset TS may comprise all or only a subset of the tools stored in repository 122. Further, toolsets TS may be adapted or confectioned according to the envisioned field of application of the model to be generated and the type of the local data at the sites XA...XN. For instance, a toolset TS for developing a machine learned model for diagnosing rheumatoid arthritis may be very from a toolset TS for detecting lung cancer form medical image data or predicting treatment responses from combined image and laboratory data. The toolsets TS may be configured by the central server unit 100 on a request base (by the local clients). Moreover, pre-configured toolsets TS may be held available in repository 122. Such pre-configured toolsets may pre-configured according to the field of application, the local data and other basic conditions at the local clients and may be accordingly selected for download to the local sites XA...XN. According to an embodiment, algorithm repository 122 and therewith the toolsets TS may be updated with new machine learning algorithms. The updating may be carried out automatically by central server unit 100 or semi-automatically under supervision of a user at central server unit 100.

Of note, the term "toolset" is not to be construed as limiting the disclosure. It merely indicates an ensemble of functions and algorithms provided to the client units 300 enabling them to locally create different types of machine learned models. Optionally, the toolset may comprise only a number or set of machine learning algorithms, however. Accordingly, steps of providing a toolset TS to the client units 300 comprise providing a number or set of machine learning algorithms to the client units from which a plurality of different types of machine learned models can be created.

The trainable machine learning algorithms stored in algorithm repository 122 may include modules predominately configured for classifying data and/or for generating numerical predictions and/or clustering data. Specifically, the algorithms may include (or may be based on) one or more neural networks (e.g., deep neural networks, recurrent neural networks, convolutional neural networks, convolutional deep neural networks, adversarial networks, deep adversarial networks and/or a generative adversarial networks etc.) and/or other algorithms including Bayesian networks, decision trees, random forest schemes, linear or logistic regression models, gradient averaging, k-means clustering, Qlearning, genetic algorithms and/or association rules or other suitable models. According to an embodiment, machine learned models are preferred which do not memorize the local data in a way that sensible information may be reconstructed (which is the case for k-nearest neighbor algorithms, for instance). According to an embodiment, the trainable machine learning algorithms may have different decision boundaries (in the case of classification), different regression lines or may differ in other key design parameters. According to an embodiment, each toolset TS comprises a plurality of different trainable machine learning algorithms each having different key parameters and thus different strengths and shortcomings. This may involve, for instance, providing a plurality of different trainable machine learning algorithms each with different decision boundaries in one toolset TS.

Computing unit 110 may comprise sub-units 111-113 configured to perform, initiate, control and/or supervise the cite-specific federated learning procedures, such as the download and deployment of toolsets TS/machine learning algorithms and machine learned models from the repositories and/or the performance monitoring of deployed machine learned models. Sub-unit 111 may be conceived as a control unit. As such, it is configured to control the download of toolsets TS and machine learned models to the client units 300, to process the data uploaded from the client units 300 (i.e., machine learned models as well as corresponding configuration files CF(A), CF(B), CF(Ai), CF(Bi), CF(BixA), CF(Ai*), CF(A2),... and performance logs PL(A), PL(B), PL(Ai), PL(Bi), PL(BixA), PL(Ai*), PL(A2),...), to control data exchange with the repositories 121, 122 (by ways of archiving and query and retrieval of data) according to one or more of the method steps as set out below in connection with Figures 2 to 4. According to an embodiment, sub-unit 111 is configured to receive information from the local sites XA...XN, e.g., pertaining to the type and amount of local data available at the respective site XA...XN, to the field of application or the underlying problem to be solved by a perspective machine learned model, to the local system architecture, to local system constraints and the like. For instance, one of the local sites XA...XN may communicate that it has a certain number of local data sets relating to rheumatoid arthritis and is looking for a machine learned model to diagnose this disease. It may further communicate the available computing power and the intended budget. In a nutshell, information of this kind may be designated as the configurational data of the respective local site XA...XN (or the respective client unit 300 for that matter) and essentially sums up the local requirements for a machine learned model for each local site XA...XN in the form of a requirement catalogue. On the basis of this configurational data, sub-unit 112 may be further configured to register the local site XA...XN with the central server unit 100 and to select and/or configure appropriate toolsets and/or machine learning algorithms and/or machine learned models from the repositories 121, 122 for download to the sites XA...XN. In this regard, in order to select and/or configure toolsets TS and/or machine learning algorithms and/or machine learned models for download, sub-unit 111 may be further configured to query model repository 121 and/or algorithm repository 122 on the basis of the configurational data and retrieving appropriate ma-chine learned models and/or tools and/or toolsets matching the configurational data. This may mean that at least parts of the configurational data and at least parts of the stored characteristics of machine learned models and/or tools and/or toolsets are matched. This may involve identifying a conformity or compatibility measure between the configurational data and, thus, the requirements of the local sites XA...XN on the one hand side, and the characteristics and, thus, capabilities of machine learned models and/or machine learning algorithms and/or toolsets on the other hand side. As will be further explained below, sub-unit 111 may be further configured to estimate the value of the local data of a given site for the further improvement of the system's machine learned model-library.

Sub-unit 112 may be configured as a performance monitoring unit. Sub-unit 112 is configured to evaluate the performance logs PL(A), PL(B), PL(Ai), PL(Bi), PL(BixA), PL(Ai*), PL(A2),... received from the local sited XA...XN for the corresponding machine learned models. Sub-unit 112 may be further configured to trigger the update of a deployed machine learned model on that basis. Moreover, sub-unit 112 may be configured to trigger the download and deployment of one or more machine learned models from the model repository 121 to one or more sites XA...XN on the basis of such performance monitoring action. Further, sub-unit 112 may be configured to apply a champion-challenger scheme upon monitoring the performance of a plurality of machine learned models available at a client unit 300. In this regard, sub-unit 112 may be configured to fetch the corresponding performance logs PL(A), PL(B), PL(Ai), PL(Bi), PL(BixA), PL(Ai*), PL(A2),... of the available machine learned models, to extract information about the estimated model performance from the performance logs PL(A), PL(B), PL(Ai), PL(Bi), PL(BixA), PL(Ai*), PL(A2),... and to compare it. The machine learned model that performed best is denoted as "champion" and a flag is sent to the client unit 300 to deploy this particular machine learned model. The other underperforming machine learned models are denoted as "challengers" and will challenge the current champion at the next instance. Sub-unit 112 may be configured to initiate performance reviews at regular time intervals. As an alternative or in addition to that, sub-unit 112 may be configured to initiate performance reviews upon receipt of new performance logs PL(A), PL(B), PL(Ai), PL(Bi), PL(BixA), PL(Ai*), PL(A2),... or every time it receives a notification from the client units 300 that the deployed machine learned model and/or the local data D(A), D(B) have been updated.

Sub-unit 113 is a supervisory module. Sub-unit 113 may be configured to allow one or more users to supervise and/or control the steps for effecting the site-specific federated learning. To this end, sub-unit 113 may be configured to provide one or more user interfaces in the form one or more display devices and input units, e.g., in the form of one or more computer workplaces, workstations, PCs, laptops or tablet computers and any combination thereof. Sub-unit 113 may be configured to run a graphical user interface allowing the user to follow the federated learning procedures and to intervene by making adjustments where required. For instance, the user may manually decide which toolset TS and/or machine learned model is to be downloaded to which site XA...XN if deemed necessary (either by the user or sub-unit 113). Further, sub-unit 113 may be configured to permit the user to manually adapt toolsets TS and/or machine learned models to the specific environment at the respective local site XA...XN. For instance, a user may synchronize variable names and/or directories. Still further, sub-unit 113 may be configured to permit the user to manually update algorithm repository 122 and therewith the toolsets with new machine learning algorithms as soon as these become available. Of note, sub-unit 113 may also be configured to carry out the aforementioned steps automatically or semi-automatically.

The designation of the distinct sub-units 111-113 is to be construed by ways of example and not as limiting the disclosure. Accordingly, sub-units 111-113 may be integrated to form one single processing unit or can be embodied by computer code segments configured to execute the corresponding method steps running on a processor or the like of computing unit 110. Each sub-unit 111-113 may be individually connected to other sub-units and or other components of the system 1 where data exchange is needed to perform the method steps. For example, sub-unit 111 may be connected to the model repository 121 and or to algorithm repository 122. The same holds true for the other sub-units 112, 113.

Central server unit 100 may exchange information with one or more client units 300 over network 200. Any number of client units 300 can be connected to central server unit 100 over network 200.

Each of the client units 300 comprises a client computing unit 310 and a local memory unit 320. Local memory unit 320 may be realized as a cloud storage accessible via the corresponding client unit 300. Alternatively, local memory unit may be realized as a local or spread storage within the premises of the respective client unit 300. Local memory unit 320 may comprise one or more local databases in which the local data D(A), D(B) is stored.

The local data D(A), D(B) may comprise a number of data sets relating, for instance, to a clinical or medical problem. As an example, the data sets may relate to laboratory test results and/or pathological data and/or medical imaging data and any combination thereof. The local data D(A), D(B) may relate to medical data of one or more patients. For instance, the local data may comprise laboratory test results and/or pathological data stemming from pathological imaging and/or medical imaging data generated by one or more medical imaging facilities such as computed tomography devices, a magnetic resonance system, an angiography (or C-arm X-ray) system, a positron-emission tomography system or the like and any combination thereof. The local data D(A), D(B) may be generated at the respective local sites XA, XB,.... Further, the local data D(A), D(B) may comprise supplementary information relating to a patient, such as diagnosis reports, information about administered treatments, information about symptoms and treatment responses, health progression and the like. Such information can be provided by ways of an electronic medical record (EMR), for instance. The local data may be stored locally in one or more databases of the client units 300. The databases may be part of a hospital information systems (HIS), radiology information systems (RIS), clinical information systems (CIS), laboratory information systems (LIS) and/or cardiovascular information systems (CVIS), picture archiving and communicating system (PACS) or the like. From these databases, the local data can be accessed locally for training machine learned models and the later regular use of the machine learned model after deployment. The local access of the training data and, in particular, the delivery of the local data D(A), D(B) to the machine learned model may be administered or controlled by the client computing units 310. In particular, the local data D(A), D(B) cannot be accessed from the outside as the local data D(A), D(B) may be subject to data privacy regulations which may prohibit that the local data leaves the local sites. To this end, the client units 300 and/or the local memory unit 320 may be configured such that the local memory unit 320 cannot be accessed from the outside.

The local data D(A), D(B) may further comprise training data sets with which a machine learned model can be trained. Training data sets may comprise training input data and associated training output data which can be used to evaluate the performance of a machine learned model during training. The output training data may relate to verified results corresponding to the input training data. The output training data may be generated and/or verified by a human based on the input training data. Further, the local data D(A), D(B) may comprise input data outside of the training data sets which is to be processed by the readily trained and deployed machine learned model during regular use.

The local databases 320 may be updated continuously or on a daily or weekly basis, or, in general, whenever new test results become available.

Client computing units 310 can be any suitable type of computing device, such as a general-purpose computer, special purpose computer, laptop, local server system, or other suitable computing device. Client computing units 310 may include one or more processor(s) and a memory. The one or more processor(s) may include, for example, one or more central processing units (CPUs), graphics processing units (GPUs), and/or other processing devices. The memory can include one or more computer-readable media and can store information accessible by the one or more processors, including instructions that can be executed by the one or more processors. The instructions can include instructions for implementing the local creation and training of machine learned models, the generation of performance logs PL(A), PL(B), PL(Ai), PL(Bi), PL(BixA), PL(Ai*), PL(A2),... and/or the generation of configuration files CF(A), CF(B), CF(Ai), CF(Bi), CF(BixA), CF(Ai*), CF(A2),.... Like the central server unit 100, client units 300 may include a network interface (as part of the interface unit) used to communicate with one or more remote computing devices such as central server unit 100 over network 200. The network interface can include any suitable components for interfacing with one more network, including for example, transmitters, receivers, ports, controllers, antennas, or other suitable components.

The client computing units 310 are generally configured to communicate with the central server unit 100. This includes communicating to the central server unit 100 configurational data such as the type and amount of the local data D(A), D(B), the field of application of perspective machine learned model, performance and/or accuracy requirements of the perspective machine learned model. Further, communication with the central server unit 100 may include receiving toolsets TS and machine learned models downloaded from the central server unit 100 and uploading machine learned models, performance logs PL(A), PL(B), PL(Ai), PL(Bi), PL(BixA), PL(Ai*), PL(A2),... and/or configuration files CF(A), CF(B), CF(Ai), CF(Bi), CF(BixA), CF(Ai*), CF(A2),... to the central server unit 100.

Client computing units 310 may comprise modules for assembling a candidate trainable model from a toolset or in general machine learned models provided to the client computing units which model may subsequently trained to form a machine learned model. According to an embodiment, the creation of a model from a toolset or the provided machine learning algorithms may involve selecting one or more trainable machine learning algorithms and assembling them to a candidate trainable model (which is then trained and evaluated). The selection of the trainable machine learning algorithms may be based on the local data D(A), D(B). Further, the description of the problem at hand and the field of application may be factored in. If it is already clear, for instance, that the perspective machine learned model has to classify local data D(A), D(B), the client computing units may focus on those algorithms provided that are particularly suited for such task.

Further, the client computing units 310 may comprise modules for training machine learned models on the basis of the local data D(A). In this regard, newly assembled candidate trainable models may be trained. Moreover, the client computing units may be configured to resume the training for already trained machine learned models (which either have been trained at the same or different sites). Machine learned models that have been newly generated at a specific site from the toolset TS without having ever seen any other site XA, XB,... are assigned the reference numeral A or B. Machine learned models that have been generated a first site A and are retrained at a second site B are subsequently denoted as AxB, BxA, BixA, AxBxB and so forth. In general, parameters of a machine learned model can be adapted by means of training. In principle, any known methods for training machine learned models may be applied by the client computing units, such as supervised or unsupervised learning, semi-supervised learning, reinforcement learning, active learning, feature learning and the like. As will be further detailed below, incremental learning may be used according to some embodiments for resuming the training of already trained models. According to an embodiment, methods for training might be brought to the local sites XA, XB,... in the form of algorithms within the toolsets TS.

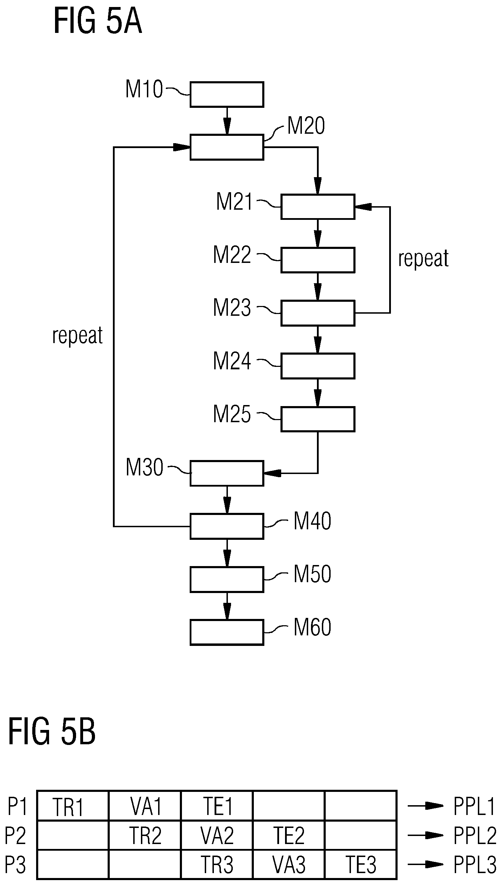

In addition, according to some embodiments, the client computing units 310 may comprise modules for generating a performance log PL(A), PL(B), PL(Ai), PL(Bi), PL(BixA), PL(Ai*), PL(A2),... indicative of how a machine learned model performs on the local data D(A). Here, any known performance metric such as, e.g., the Area Under the ROC Curve (AUC), may be used by the client computing units 310. As another example, the client computing units may be configured to apply (nested) cross-validation schemes for generating the performance logs PL(A), PL (B), PL(Ai), PL(Bi), PL(BixA), PL(Ai*), PL(A2),.... Yet, as will be further detailed in connection with Figure 5, a further scheme specifically adapted for cross-site incremental learning may be used. According to an embodiment, methods for generating the performance logs PL(A), PL(B), PL(Ai), PL(Bi), PL(BixA), PL(Ai*), PL(A2),... might be brought to the local sites XA, XB,... in the form of algorithms within the toolsets TS.

Moreover, the client computing units may comprise modules for generating configuration files CF(A), CF(B), CF(Ai), CF(Bi), CF(BixA), CF(Ai*), CF(A2),... associated to the respective machine learned models. The configuration files CF(A), CF(B), CF(Ai), CF(Bi), CF(BixA), CF(Ai*), CF(A2),... may, for instance, comprise indications of the pre-processing steps required to feed the local data D(A), D(B) into the machine learned models. Further, the configuration file may contain local variable names and other information pertaining to the local environments of the sites XA...XN such as local directories, data structures or the like.

To ensure that no privacy sensitive information can be derived or inferred from the machine learned models, performance logs or configuration files, one or more encryption techniques, random noise techniques, and/or other security techniques can be added by the client computing units 310 upon training or generating data logs to obscure any inferable information according to some embodiments.

As mentioned, individual components of system 1 may be at least temporarily connected to each other for data transfer and/or exchange via network 200. Network 200 may be any type of communications network, such as a local, e.g., an intranet, or wide area network, e.g., the internet, a cellular network, or some combination thereof. Network 200 may also comprise wireless network components. Network 200 can also include a direct connection between the central server unit 100 and the client units 300. In general, communication between the central server unit 100 and client units 300 can be carried out via network interfaces (forming an interface unit) using any type of wired and/or wireless connection, using a variety of communication protocols (e. g. TCP/IP, HTTP, SMTP, FTP) encodings or formats (e.g. HTML) and/or protection schemes (e.g., VPN, HTTPS, SSL).

In the following, flowcharts depicting method steps according to some embodiments are shown in Figures 2 to 5. The flowcharts are likewise representative of example hardware logic or machine-readable instructions for implementing the method steps in the form of one or more computer programs. Programs may be embodied in software stored on a non-transitory computer readable storage medium such as a CD-ROM, a floppy disk, a hard drive, a DVD, a Blu-ray disk, or a memory associated with the processor. The entire program and/or parts thereof could alternatively be executed by a device other than the processor and/or embodied in firmware or dedicated hardware. Further, although example methods are described with reference to the flowchart illustrated in Figures 2 to 5, other methods may alternatively be derived from the ensuing disclosure. For example, the order of execution of the method steps may be changed, and/or some of the method steps described may be changed or eliminated. Moreover, individual method steps as shown in Figures 2 to 5 may be combined.

Figure 2A depicts a basic sequence of method steps for implementing a site-specific federated learning procedure according to an embodiment. The steps shown on the left hand side of Figure 2A are executed by the central server unit 100 (i.e., the central server unit 100 is configured to execute these steps), whereas the steps shown on the right hand side are executed by the client units 300 (i.e., the client units 300 are respectively configured to execute these steps). Figure 2B illustrates the corresponding exchange of information between the central server unit 100 and the client units 300.

According to a first optional step C5, the sites XA, XB,... (the client units 300) may communicate (to the central server unit 100) a request for enrollment in the federated learning scheme governed by the central server unit 100. The request may contain the aforementioned configurational data of the respective local site XA, XB,... comprising information about the type and amount of the local data stored at the local sites XA, XB,..., the field of application etc.

A second step S10 is directed to downloading an appropriate toolset TS (or a set of machine learning algorithms) from the central server unit 100 to one or more of the client units 300. The toolset TS (or the set of machine learning algorithms) is then received at the client units 300 in subsequent step C10. In this regard, the central server unit 100 may select or compile an appropriate toolset TS (or set of machine learning algorithms) for download on the basis of configurational data and other information available about client units 300 and the intended use of the perspective machine learned model. In this regard, central server unit 100 may revert to one or more pre-configured toolsets (or sets of machine learning algorithms) stored in algorithm repository 122 or confection an appropriate toolset TS (or set of machine learning algorithms) from individual algorithms as stored in algorithm repository 122. If no information for selecting an appropriate toolset is available, central server unit 100 may be configured to download a standard toolset (or set of machine learning algorithms) covering common fields of application to client units 300. As yet a further alternative, the toolset TS (or the set of machine learning algorithms) may also be provided to the client units 300 differently than by ways of a download. For instance, the toolset TS (or the set of machine learning algorithms) may already be present at the sites XA...XN from a previous download. Moreover, the toolset TS may be provided to the client units 300 by downloading/installing it from different sources other than from central server unit 100. For instance, this may involve using repositories of third-party providers (comprising, for instance, open source trainable machine learning algorithms) .

Using the toolset TS (or the set of machine learning algorithms), at least a new machine learned model is generated and trained at the local sites XA, XB,... by the client units 300 in step C20 (from scratch). The ensuing machine learned model will, in general, depend on the intended field of application, the computational environment at site XA, XB,... and, of course, the local data D(A), D(B). The generation or creation of a machine learned model may involve the steps of selecting appropriate building blocks from the toolset or the set of machine learning algorithms, training, validation and testing. As mentioned, any known method, such as appropriate cross-validation schemes, may be applied in this regard.

In step C21, a performance log PL(A), PL(B) is generated for the machine learned models A, B by the respective client unit 300. The performance log is indicative of the performance of a given machine learned model A, B, e.g., in terms of the accuracy of the machine learned model A, B. The performance log PL(A), PL(B) may be generated by measuring the performance of a machine learned model A, B on local test sets as part of the local data D(A), D(B). In this regard, any appropriate performance metric may be used to generate the performance logs PL(A), PL(B). One example is the Area under the ROC Curve method (AUC) as often used in binary classification tasks. Further, initial model development, training and the generation of a performance log may be interlinked. For instance, the machine learned model might be trained, validated, and at the same time tested by a nested cross-validation scheme, which provides an indication of the performance of a machine learned model (as compared to other machine learned model derivable from the toolset TS or the set of machine learning algorithms). Cross-validation is a common statistical model evaluation technique for assessing how a model will generalize to new or "unseen" data (i.e., data that were not used to generate or train the model). One or more rounds or iterations of cross-validation may typically be performed, in each of which the local data D(A), D(B) is split into a training subset and a test subset (typically using random selection). The machine learned model is trained using the training subset and the quality of the machine learned model's predictions is evaluated using the test subset (e.g., quality metrics based on the errors in predicting the test set values may be obtained). Metrics of model quality obtained from the different cross-validation iterations may then be aggregated in various ways (e.g., the mean value and/or confidence intervals of the quality metric may be obtained) to arrive at a final quality metric for the machine learned model which is then reflected in the performance log. Often, the training of machine learned models involves the tuning of superordinate parameters of a model (often denoted as "hyperparameters"). One example for such hyperparameters would be parameter "tree depth" in decision trees and random forests that controls the trade-off between achieving a low training error and a low testing error. If, in ordinary cross validation, the test is used for both selecting the values of the hyperparameters and evaluating the model, the performance evaluations are optimistically biased. One way to overcome this problem is to use nested cross validations, which basically comprises (1) an inner cross validation to tune the parameters and select the best model and (2) an outer cross validation used to evaluate the model selected by the inner cross validation.

Upon generating and training the machine learned model A, B in step C20, a configuration file CF(A), CF(B) is generated by the client units 300 in step C22. As mentioned, the configuration files CF(A), CF(B) are indicative of the configuration of the machine learned models A, B as developed and trained for the respective sites XA, XB. The configuration files CF(A), CF(B) may reflect the local computational environment at the sites XA, XB and may, for instance, include preprocessing steps necessary to feed the local data D(A), D(B) into the machine learned model A, B.

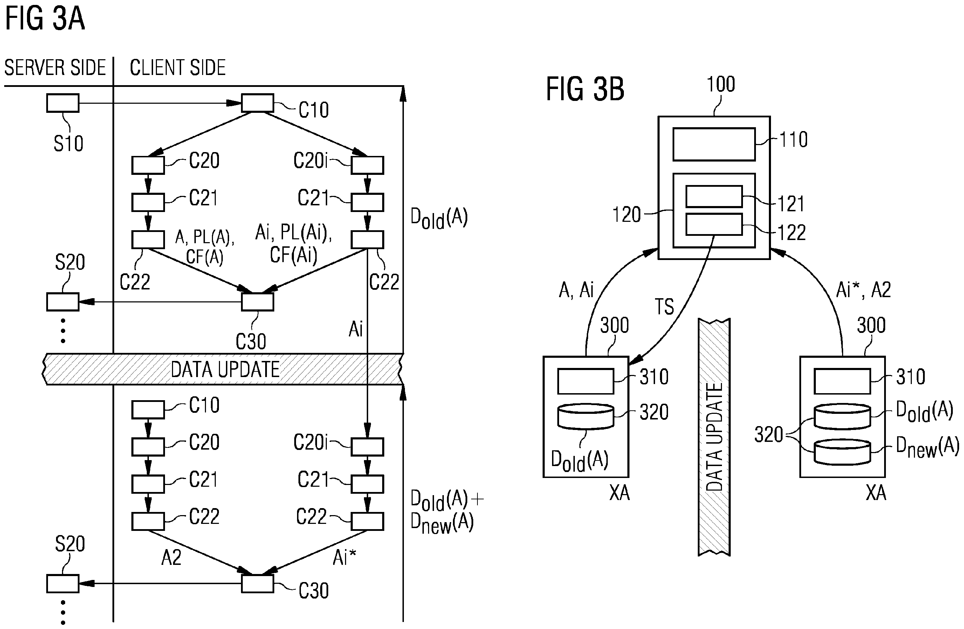

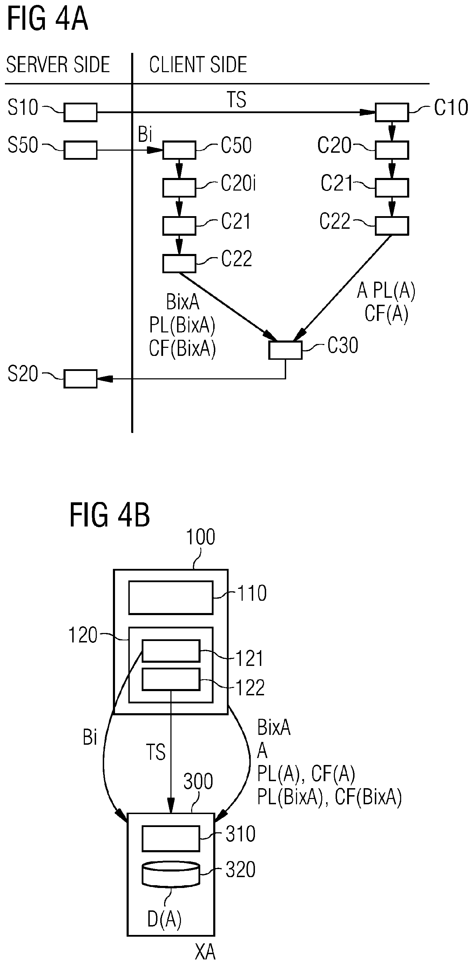

Of note, more than one machine learned model A, B may be generated per site already at this instance. For instance, a client unit 300 may assemble and train a plurality of machine learned models that may rely on slightly different basic trainable algorithms. Further, more than one machine learned model may result if one incremental machine learned model Ai has been assembled and trained using incremental machine learning alongside with further machine learned models A that do not support incremental machine learning. The principles of incremental machine learning will be further elucidated below in connection with Figures 3 and 4.

The machine learned models A, B and any associated information, such as configuration files CF(A), CF(B) and performance logs PL(A), PL(B) are uploaded to central server unit 100 by client units 300 in step C30 and are received at central server unit 100 in step S20. Upon receipt, central server unit 100 may process the thus uploaded data and archive the machine learned models A, B alongside the associated performance logs PL(A), PL(B) and configuration files CF(A), CF(B), e.g., in the corresponding model repository 121. In this regard, central server unit 100 may assign appropriate electronic identifiers to the machine learned models A, B, performance logs PL(A), PL(B), and configuration files CF(A), CF(B), so that performance logs PL(A), PL(B) and configuration files CF(A), CF(B) are unambiguously relatable to the respective machine learned model A, B. According to an embodiment, machine learned models A, B and the associated information are archived in a readily searchable format so that they can easily be retrieved from the repositories when needed. To this end, central server unit 100 may use the aforementioned characteristics of the machine learned model for organizing model repository 121.

In step S40, the performance of the machine learned models A, B may be evaluated by the central server unit 100 using the respective performance logs PL(A), PL(B). If the performance is deemed satisfactory on that basis, the central server unit 100 may decide to deploy the respective machine learned model A, B at the respective local site XA, XB. The decision to deploy the machine learned model is then transmitted to the respective client units 300 where the model is subsequently deployed (step C40). As an alternative, the decision to deploy a machine learned model may be made locally at the sites XA, XB by client units 300. This local decision may likewise be based on the respective performance log PL(A), PL(B). As yet a further alternative, deployment may happen automatically as soon as the respective machine learned model A, B is readily trained.

Once developed and deployed on-site, machine learned models are permanently automatically monitored. To this end, further performance logs PL(A), PL(B) are generated at the client units 300 (step C21) and uploaded to the central server unit 100 (step C30). Performance logs PL(A), PL(B) may be generated and uploaded periodically at predetermined intervals. As an alternative or in addition to that, the generation of further performance logs PL(A), PL(B) may be automatically triggered whenever the local data D(A), D(B) is updated. The further performance logs PL(A), PL(B) are uploaded (step C30) by client units 300 to central server unit 100 where they are received and, optionally, archived, e.g., in model repository 121 (steps S20 and S30). Like before, archiving is done such that the further performance logs PL(A), PL(B) can be unambiguously related to the underlying machine learned model (e.g., by using appropriate electronic identifiers). The transmitted further performance logs PL(A), PL(B) may subsequently be used by central server unit 100 to continuously monitor the performance of the respective machine learned model currently deployed at a given site XA, XB. Once a deterioration in performance is detected on that basis, e.g., when the accuracy of a machine learned model drops below a predefined threshold (e.g., by 5 or 10 % depending on the use case), a mechanism for model update (i.e. model retraining, validation and testing) may be triggered (the process of updating is addressed separately in connection with Figure 3 below). Another reason for triggering a new training procedure is when new promising machine learning algorithms become available in the toolset.

As an alternative to the commanding a model update, central server unit 100 may decide to download a further model from the model repository to a given client unit 300 in order to replace or challenge a machine learned model that was found underperforming (step S50). To this end, the central server unit 100 may be configured to query the model repository 121 for a suited machine learned model based on the configurational data of the local site XA, XB under consideration (such as the field of application and further determining factors relevant for the site under consideration) and the stored characteristics of the stored machine learned models A, B, Ai, AxB,.... In this regard, the machine learned models A, B, Ai, AxB,... for download may either relate to machine learned model A, Ai,... which have been previously trained and/or deployed at the site XA under consideration or to "cross-site" models B, AxB,... which stem from different sites XB,.... The downloaded machine learned models Ai, B, AxB,... are received at the sites XA, XB in step C50. In a next step C51, they are adapted to the new site. The adaptation in step C51 may comprise merely mapping variable names between the machine learned models and the local sites XA, XB. However, the adaption in step C51 may also amount to adjusting model-parameters of the machine learned models including a partial or complete re-training of the downloaded machined learned models. That followed, corresponding performance logs PL(Ai), PL(B), PL(AxB) and configuration files CF(Ai), CF(B), CF(AxB) are generated as described above (steps S21 and S22). Performance logs PL(Ai), PL(B), PL(AxB) and configuration files CF(Ai), CF(B), CF(AxB) are uploaded to central server unit 100 in step C30, where this information is received (step S20) and, optionally, stored (step 30) in association to the respective downloaded machine learned model Ai, B, AxB. The performance logs PL(Ai), PL(B), PL(AxB) are then used to evaluate the performance of the downloaded machine learned model Ai, B, AxB on the local data D(A) by central server unit 100 (step S40). If the performance of the downloaded machine learned models Ai, B, AxB is deemed sufficient on that basis, central server unit 100 may decide to deploy a respective one of the machine learned models Ai, B, AxB at site XA and correspondingly trigger the deployment of the model in step C40, thereby replacing previously used machine learned model A. If the performance of machine learned model Ai, B, AxB is not sufficient, central server unit 100 may trigger a retraining (or, if possible, an update) of all machine learned models A, Ai, B, AxB at the respective site XA on the basis of the local data D(A), download further machine learned models or simply decide to stick to the original machine learned model A of site XA.

The above processes may be initiated and controlled by central server unit 100. However, according to an embodiment, the systems and methods might provide client units with the ability to review and approve of the actions decided by central server unit 100. This may include that the client units 300 may decline model updates or downloads.

According to the above, more than one machine learned model A, Ai, B, AxB,... may become available at a site. This enables to apply a so-called champion-challenger concept for evaluating the performance of machine learned models A, Ai, B, AxB,... available at a given site and deciding which of the available machine learned models A, Ai, B, AxB,... is to be deployed. Specifically, in step S40, the performance of the available machine learned models A, Ai, B, AxB,... may be compared and the best one becomes "the champion" and gets deployed, while the others are the "challengers" which will challenge the "champion" at the next instance of performance review and/or model or data update.

As indicated in Figure 2B, the above concept, i.e., the steps S10-S50 and C5 to C40, are not only applicable to one site XA but may be generalized to two sites XA, XB or, generally, to an arbitrary number of sites XA, XB,..., XN. At each site XA, XB, a site-specific model A, B is trained using local data D(A), D(B) and the same scalable steps, methods and algorithms as described above. Afterwards, only the trained machine learned models A, B,... their corresponding configuration files CF(A), CF(B),... and performance logs PL(A), PL(B),... are sent back to the central server unit 100 and archived. In doing so, a library of machine learned models A, B,... is generated at the central server unit 100.

In order to further benefit from the system's ability of exchanging machine learned model across sites XA, XB,..., an incremental learning scheme may be applied when generating and training the machine learned models locally at sites XA, XB,... (step S20i, c.f. Figure 3A). Basically, incremental learning yields machine learned models which are able to gradually adapt to new data without requiring complete retraining. In other words, such incremental machine learned models Ai, Bi preserve previously acquired knowledge and are able to adopt new knowledge. As such, incremental machine learned models Ai, Bi are very suitable for learning beyond the creation phase which enables to adapt to changing data sources and local environments at the sites XA, XB,... and yields machine learned models which are often denoted as "scalable". This is different from traditional machine learned models A, B the training phase of which is irreversibly completed. As such, traditional machine learned models A, B are unable to continuously integrate new information with the consequence that updates of the local data D(A) and D(B) may require complete re-trainings or even the reconstruction of new models from the scratch. Incremental machine learned models are characterized with an "i" in the corresponding reference numeral (e.g., Ai, Bi).

Many traditional machine learning algorithms inherently support incremental learning. Other algorithms can be adapted to facilitate incremental learning. Examples of incremental algorithms include decision trees, several artificial neural networks, stochastic gradient descent or Naive Bayes.

Figures 3A and 3B depict an example of how incremental learning may be implemented for site specific machine learning according to an embodiment. Thereby, the focus is on the method steps as performed on the side of the client units 300. The method steps performed at the central server unit 100 complementing the steps at the client units 300 are identical or similar to the steps as described in connection with Figures 2A, 2B (i.e., steps S10, S20, S30, S40, S50).

According to an embodiment, the client units 300 may, in general, initialize or create, train, validate and test two kinds of machine learned models: traditional machine learned models, the training of which is irreversibly completed, and incremental machine learned models which can be further trained. This is illustrated in Figure 2A. Traditional machine learned models and incremental machine learned models may be generated subsequently or simultaneously. Moreover, any number of incremental machine learned models or traditional machine learned models may be generated. Likewise, the method may be adapted such that only incremental machine learned models or traditional machine learned model are generated at the site XA.

Based on a toolset TS (or a set of machine learning algorithms), client unit 300 at site XA may generate (i.e., create, train, validate and test) a machine learned model A from scratch based on local data D(A) which is not capable of being further trained (step C20). As indicated above, the toolset TS (or the set of machine learning algorithms) either may have been selectively downloaded to the site or may already be present at site XA. As described previously, step C20 may be accompanied by the steps of generating a corresponding performance log PL(A) (step C21) and configuration file (step C22) which may subsequently be uploaded together with the machine learned model to the central server unit 100 (step S30) .

Further, client unit 300 is adapted to generate (i.e., develop train, validate and test) an incremental machine learned model Ai likewise based on local data D(A) (step C20i). To this end, the client unit 300 may either rely on a toolset TS (or a set of machine learning algorithms) and select basic algorithms therefrom that support incremental learning, or a dedicated toolset TS (or dedicated set of machine learning algorithms) configured for deriving incremental machine learned models may be provided to client unit 300. The generation of an incremental machine learned model may generally involve the same procedure as the generation of other machine learned models. Like in the case of other machine learned models, a performance log PL(Ai) and a configuration file CF(Ai) are generated for incremental machine learned model Ai and uploaded to the central server unit 100 (step C30). Based on the uploaded performance logs PL(A), PL(Ai), central server unit 100 may then decide which one of the machine learned models A, Ai thus generated shall be deployed at the site as explained in connection with Figure 2A. In particular, this may involve using the champion-challenger approach.

One difference between the incremental machine learned models and non-incremental machine learned models comes into play when the local data D(A) has been updated and/or a model update is initiated by the central server unit 100. A data update may be conceived as enhancing previously known data D_{old}(A) with new data D_{new}(A). While training of the incremental machine learned model Ai can be resumed (step C20i) using the new data D_{new}(A) only (to form the updated incremental machine learned model Ai*), this is not possible for machine learned models not capable of incremental machine learning. As shown in Figure 3A, one option in this regard is to generate an entirely new machine learned model A2 based on the toolset TS (or set of machine learning algorithms) and using the complete dataset D_{old}(A)+D_{new}(A) (step C20). A further option not shown in Figure 2A would be completely re-training machine learned model A likewise resulting in a "new" machine learned model which has forgotten the knowledge from previous trainings. In any case, all machine learned models thus created, i.e., updated incremental machine learned model Ai*, new machine learned model A2 and the re-trained machine learned model are uploaded to central server unit 100 together with the corresponding performance logs PL(A2), PL(Ai*) and configuration files CF(A2), CF(Ai*) (step C30).

The generation of site-specific machine learned models A, A2 using classical machine learning and scalable cross-site incremental machine learned models Ai, Ai* may be synergistically combined with the aforementioned champion-challenger approach. Accordingly, the performance of the available machine learned models A, A2, Ai, Ai* is compared and the best one becomes "the champion" and gets deployed, while the others become the "challengers" which will challenge the champion at the next instance of data update. Specifically, after training machine learned model A (or A2) and incremental machine learned model Ai (or Ai*), copies of the machine learned models and their associated configuration files CF(A), CF(A2), CF(Ai), CF(Ai*) and performance logs CF(A), CF(A2), CF(Ai), CF(Ai*) are uploaded to central server unit 100 and stored in the corresponding repository. The performance monitoring module then fetches the corresponding performance logs CF(A), CF(A2), CF(Ai), CF(Ai*), extracts information about the estimated model performance and compares it. The model that performed best on test sets of the local data D_{old}(A)+D_{new}(A) (or in cross-validation) is denoted as a "champion" and a flag is sent to site XA to deploy this particular model in practice. The other, underperforming models are denoted as "challengers" and will challenge the current champion at the next instance.

The incremental machine learning framework becomes even more versatile if multiple sites XA, XB with different data owners are considered. As mentioned, central server unit 100 may also download and deploy machine learned models at sites other than their sites of origin (c.f., step S50 in Figure 2A). If incremental machine learned models are used in this regard, their training may be resumed at a "new" site XA despite of the fact that they may have been created at a different site XB. This principle is illustrated in Figures 4A and 4B.

In the following, it is assumed that incremental machine learned model Bi has already been created on a site XB and was uploaded to and saved in model repository 121 of central server unit 100. It may then be selected for download to a site XA by central server unit 100 (step S50), if, for instance, the profile of requirements of site XA (i.e., the configurational data of site XA) matches the characteristics of incremental machine learned model Bi (as, for instance, derivable from the configuration file, performance log and other metadata associated to incremental machine learned model Bi). Being an incremental machine learned model, it is possible to resume training of Bi based on the local data D(A) of site XA upon receipt by the client unit 300 of site XA (step C20i). This procedure generates an incremental machine learned model common for sites XA and XB denoted by model BixA. At the same time, a site-specific (incremental) machine learned model A or Ai may be trained on site XA from scratch based on the toolset TS (or set of machine learning algorithms) and using the local data D(A) of site XA as explained before. Thus, training of both site-specific and cross-site (incremental) machine learned models is enabled. Of note, the generation of site-specific (incremental) machine learned models is optional and may be omitted. In any case, all (incremental) machine learned models thus generated are subsequently uploaded to central server unit 100 together with the corresponding performance logs PL(A), PL(Ai), PL(BixA) and configuration files CF(A), CF(B), CF(BixA) (step C30). In central server unit 100, the uploaded machine learned models A, Ai, BixA and performance logs PL(A), PL(Ai), PL(BixA) and configuration files CF(A), CF(B), CF(BixA) are subsequently stored in the corresponding repositories as described before.

Self-speaking, this principle may be combined with the incremental model update as described in connection with Figures 3A and 3B. If new data becomes available on site XA, a model update procedure may be initiated by the performance monitoring module of central server unit 100 (c.f., Figure 2A, step S40). This may trigger resuming the training of incremental machine learned models Ai, BixA, the retraining of machine learned models A not capable of incremental learning and/or the generation of new site-specific machine learned models A2 from scratch based on an appropriated toolset TS and the respective local data D(A).

In this regard, according to an embodiment, it is suggested that if some other site XA becomes available in the system a and a cross-site incremental machine learned model BixA is further trained on that site XA, a model-update will be initiated at all sites XB where previous versions (Bi) of the incremental machine learned model BixA have been trained before. Accordingly, in case cross-site incremental machine learned model BixA was improved thanks to the local data D(A) of a new site XA, this improvement will be automatically tested and potentially deployed at all sites XB where this incremental machine learned model was used before.

In order to streamline the deployment of the cross-site machine learned models and the further training of the incremental machine learned models, a compatibility check may be performed by central server unit 300 according to an embodiment. This compatibility check may be based on the configurational data of the respective site, for instance. Specifically, this may involve checking if the technical prerequisites defined in the configuration file of a machine learned model match the configurational data of the respective site. With that, it can be checked whether or not the features used by the model are available at the new site, whether or not the number and type of class labels is identical and so forth.

As mentioned, the cross-site deployment of machine learned models likewise requires that machine learned models are validated and tested at the new sites XA in order to evaluate whether they are fit for deployment. This brings about the problem, however, that known methods for training and performance evaluation, such as the aforementioned nested cross-validation schemes, cannot be readily applied to such a scenario. This is because every iteration in cross-validation traditionally results in a model realization the training of which has been irreversibly completed. If machine learned models are brought to a new site XA, the anew application of cross-validations schemes would therefore bring about a complete re-training of these machine learned models on the local data D(A) at the new site XA. In other words, this means that cross-site machine learned models would thus "forget" the knowledge adopted at their previous sites of deployment. This is ineffective and may result in poorly performing machine learned models, in particular, if the new local data D(A) is scarce, for instance.

In order to still evaluate the performance of a downloaded (incremental) machine learned model B, Bi on a new site XA, the complete local data D(A) available at site XA may considered as test data (no training is performed). By computing predictions and comparing them to real values, a performance log can be generated using some appropriate performance metric such as, e.g., the Area Under the ROC Curve (AUC), and the model performance may be evaluated on that basis. If the performance of (incremental) machine learned model B, Bi on local data D(A) corresponds to the desired predefined level, (incremental) machine learned model B, Bi can be deployed and used on site XA. If not, a different machine learned model may be downloaded to site A and/or a new machine learned model may be generated from scratch at site XA and/or a retraining may be performed.

Yet, the inventors recognized that the usage of incremental machine learned model Bi offers an additional option in this regard taking advantage of the incremental machine learning ability of these models. The corresponding workflow and method are illustrated in Figures 5A and 5B.

The starting point is that an incremental machine learned model Bi is provided to the client unit 300 at a site XA, for instance, under the circumstances as explained in connection with Figures 4A and 4B. In the example, incremental machine learned model Bi is a cross-site incremental machine learned model which has been generated at a site XB different from the site XA it is now downloaded to (the downloaded incremental machine learned model Bi may also called "initial" or "newly downloaded" incremental machine learned model). Accordingly, at site XA, incremental machine learned model Bi is now subjected to new local data D(A) it has never seen before. By consequence, the newly downloaded incremental machine learned model Bi needs to be updated on the basis of the data D(A) at site XA and the prospective performance of the incremental machine learned model for the site XA needs to be estimated (i.e., a performance log PL(Bi) needs to be generated). While the example is based on the assumption that the initial incremental machine learned model Bi is received by ways of download from the central server unit 100, it should be noted that the following method is equally applicable to incremental machine learned models Ai that already have been generated at the sites and now require updating in view of updated local data D(A).

In any case, as a first step M10, the whole available local training data comprised in D(A) is partitioned into a desired number of folds. In Figure 5B, five folds are shown for illustration. However, the partitioning may yield any number of folds. Typically, four to ten folds are generated just like in state-of-the-art cross-validation schemes. When partitioning the local data D(A), the folds are optionally chosen such that all data belonging to a single patient are always in only one of the folds and not distributed across the folds. This reduces crosstalk between the folds and limits any potential bias, thereby improving the overall result.

As illustrated in Figures 5A and 5B, the method runs through a plurality of N iterations I1, I2,... IN. In each iteration, a fold TR1, TR2, TR3,... (or subset of folds) is used for further training of the incremental machine learned model, another fold VA1, VA2, VA3,... (or subset of folds) is used for validating and yet another fold TE1, TE2, TE3,... (or subset of folds) is used for testing the incremental machine learned model Bi. For each iteration, training, validation and testing folds are permutated across the folds as shown in Figure 5B. In the first iteration, fold TR1 is the training fold, fold VA1 is the validation fold, and fold TE1 is the testing fold. In the second iteration, fold TR2 is the training fold, fold VA2 is the validation fold, and fold TE2 is the testing fold, and so forth. Thus, in other words, each iteration corresponds to a permutation P1, P2, P3 of the training, validation and testing folds across the local data D(A). In Figure 5B three permutations P1, P2, P3 are shown as an example. In general, there will be at least as many permutations as folds so that each fold may once serve as training fold, however.

Each iteration comprises the steps of determining optimized hyperparameters of incremental machine learned model Bi (step M20) and recording a partial performance log PPL1, PPL2, PPL3,... on that basis (step M30). In the first iteration of steps M20 and M30, the first permutation P1 is used, in the second iteration P2 is used and so forth. Step M40 is a repeat-step.

Step M20 comprises sub-steps M21 to M25 governing the details of the hyperparameter-optimization. For the sake of easy reference, it is assumed that the incremental machine learned model Bi has one hyperparameter that needs to be optimized. The hyperparameter can take several potential values. In step M21, the initial incremental machine learned model Bi is further trained on the training fold TR1 for a first potential value of the hyperparameter. Subsequently, in sub-step M22, the performance of the ensuing incremental machine learned model (with the hyperparameter being set to the first value) is measured on a separate validation fold VA1. Sub-steps M21 and M22 are then repeated for further potential values of hyperparameter to be optimized. The step of repeating is designated as step M23. After all potential values of the hyperparameter have been scanned and the respective model performances have been recorded, the optimal value for the hyperparameter is selected in sub-step M24 based on a comparison of the individual model performances. Then a final machine learned model Bi of this iteration is trained on the fold TR1 with the hyperparameter being set to the optimized value (sub-step M25). Usually, an incremental machine learned model will not just have one but a plurality of hyperparameters. For determining a set of optimal values for a plurality of hyperparameters, sub-steps M21 and M22 have to be carried out for all possible parameter combinations, each time measuring the model performance. The sub-steps M21 to M25 can be seen as defining an inner loop of the proposed cross-validation scheme. The training and validation folds of the inner loop may be designated as a first sub-set of folds (which comprises (at least) two folds: Training fold and validation fold).

Now that optimal hyperparameters have been found and the training of the incremental machine learned model has been finalized for the first permutation P1 (iteration), the performance of the incremental machine learned model obtained so far can be evaluated in step M30. To this end, the resulting incremental machine learned model is tested on test fold TE1 and a corresponding partial performance log PPL1 is generated. The partial performance log PPL1 is indicative of how an incrementally updated incremental machine learned model performs on the local data D(A) at site XA after the first iteration.

Next, steps M20 and M30 are repeated in the next iteration with a different permutation P2. The corresponding repeating step is denoted by M40 in Figure 5A. In the second iteration, the incremental machine learned model is further incrementally trained on the training fold TR2, its hyperparameters are optimized using validation fold VA2 (sub-steps M21 to M25) and finally its performance is obtained in terms of a partial performance log PPL2 by testing it on the test fold TE2 (step M30). That followed, the same steps are performed in the subsequent iterations each with different permutations of the training, validation and test folds. Steps M20, M30 and M40 may be conceived as defining an outer loop of the proposed cross-validation scheme. The test fold of the outer loop may be designated as a second subset of the folds (which may comprise only one fold, though).

Being based on interlinked inner and outer loops, the proposed cross-validation scheme thus relies on two nested loops. One difference to usual nested cross-validation schemes lies in the fact that there is only one permutation of the folds for each iteration of the outer loop. By contrast, usual nested cross-validation is based on a separate full permutation of the folds of the inner loop for each iteration of the outer loop. By relying on the ability of incremental machine learned models to resume training, this can be replaced by a one-fold permutation in terms of a rolling validation which is faster and still yields comparable results.

Once all iterations (permutations) have been traversed, the training of the thus updated incremental machine learned model may be finalized (step M50) by further training it on those folds that have not yet been used for training in the last iteration, i.e., the test and validation folds of the last iteration (in the example as given in Figure 5B this would be folds TE3 and VA3). The ensuing updated incremental machine learned model BixA is typically the machine learned model which is reported back to the central server unit 100 (i.e., uploaded to the central server unit 100). The corresponding hyperparameters obtained may be recorded in the configuration file CF(BixA) (together with other suitable metadata and/or required preprocessing steps).

For generating the performance log corresponding to updated incremental machine learned model BixA in step M60, the partial performance logs PPL1...PPLN measured in different iterations for the different permutations P1, P2, P3,... are averaged. Additionally, the standard deviation of this average may be computed. The averaged model performance may be reported to central server unit 100 as performance log PL(BixA).

Of note, the averaged model performance value and its standard deviation are a conservative estimate of the expected model performance on the future data - especially if the final incremental machine learned model BixA (for which this estimated performance value is reported) is further trained on folds not used for training in the last iteration (c.f. step M50). In that case, incremental machine learned model BixA is trained on more data than used in performance estimation and can generally be assumed of performing better than estimated. The estimate is even more on the conservative side, if all data belonging to a single patient is in one of the three sets (training, validation or test) only (as this rules out any systematic bias when updating the model).

Wherever meaningful, individual embodiments or their individual aspects and features can be combined or exchanged with one another without limiting or widening the scope of the present invention. Advantages which are described with respect to one embodiment of the present invention are, wherever applicable, also advantageous to other embodiments of the present invention.

The following points are also part of the disclosure:
1. Computer-implemented method for client-specific federated learning in a system comprising a central server unit and a plurality of client units, wherein the client units are respectively located at different local sites and respectively comprise local data,
   the method comprising the steps of:
   providing, to at least one of the client units, a toolset, the toolset being configured such that a plurality of different types of machine learned models can be created with the toolset locally at the at least one client unit;
   receiving, from the at least one client unit, one or more machine learned models, the one or more machine learned models being respectively created with the toolset and trained based and the respective local data by the at least one client unit; and
   storing the one or more machine learned models in the central server unit.
2. Method according to 1, further with the steps of:
   receiving, from at least one of the client units, one or more updated incremental machine learned models, the updated incremental machine learned models being machine learned models updated locally by the at least one client unit based on the further training of the one or more incremental machine learned models on the respective local data of the at least one client unit by incremental machine learning; and
   storing the one or more updated machine learned models in the central server unit.
3. Method according to 1 or 2, further with the step of:
   downloading, to at least one of the client units, one or more cross-site incremental machine learned models from the central server unit, which cross-site incremental machine learned models have been respectively trained at client units different to the at least one client unit they are downloaded to and the learning of which can be resumed by incremental machine learning.
4. Method according to any of the preceding points, further with the steps of:
   providing, to at least one of the client units, an incremental machine learned model, the learning of which can be resumed by incremental machine learning;
   partitioning the local data of the at least one client unit into a plurality of folds;
   performing one or more cross-validating operations on the incremental machine learned model across the folds to obtain an updated incremental machine learned model and an associated performance log indicative of how the updated incremental machine learned model respectively performs on the respective local data of the at least one client unit, wherein the cross-validating operations involve the continuous further training of the incremental machine learned model by incremental machine learning.
5. Method according to 4, wherein the step of performing further comprises:
   determining a set of (i.e., one or more) optimized hyperparameters of the incremental machine learned model by further training the incremental machine learned model using a first subset of the folds by incremental machine learning;
   generating a partial performance log by testing the resulting incremental machine learned model with the set of optimized hyperparameters on a second subset of the folds different than the first subset;
   repeating the steps of determining and generating for permutations of the first and second subsets across the folds, wherein the incremental machine learned model is being continuously further trained from permutation to permutation by incremental machine learning to generate the updated incremental machine learned model and, for each permutation, a further partial performance log; and
   generating the performance log on the basis of the partial performance logs.
6. Method according to 5, wherein the step of determining the set of optimized hyperparameters comprises:
   further training the incremental machine learned model for a first set of values for the set of hyperparameters of the incremental machine learned model on a first fold of the first subset of folds by incremental machine learning;
   determining the hyperparameter performance of the resulting incremental machine learned model on a second fold of the first subset different than the first fold;
   repeating the steps of further training and determining the hyperparameter performance for further sets of values for the set of hyperparameters on the first and second folds; and
   determining an optimized set of values for the set of hyperparameters on the basis of the hyperparameter performance so as to generate a corresponding optimized set of hyperparameters.
7. Method according to 5 or 6, wherein the step of generating the performance log comprises averaging the partial performance logs.
8. Computer-implemented method for client-specific federated learning in a system comprising a central server unit and a plurality of client units each comprising local data, the method comprising the steps of:
   receiving, by at least one of the client units, a toolset, the toolset being configured such that a plurality of different types of machine learned models can be created with the toolset;
   creating with the toolset and training on the basis of the respective local data of the at least one client unit one or more machine learned models by the at least one client unit; and
   uploading, by the at least one client unit, the one or more machine learned models to the central server unit.
9. Method according to 8, further with the step of: receiving, by at least one of the client units, one or more machine learned models from the central server unit.
10. Method according to 8 or 9, further with the steps of:
   updating, by at least one of the client units, one or more machine learned models based on the respective local data at the at least one client unit to generate one or more updated machine learned models; and
   uploading, by the at least one client unit, the one or more updated machine learned models to the central server unit.
11. Method according to 8 or 9, further with the steps of:
   further training, by at least one of the client units, one or more incremental machine learned models based on the respective local data at the at least one client unit by incremental machine learning to generate one or more updated incremental machine learned models; and
   uploading, by the at least one client unit, the one or more updated incremental machine learned models to the central server unit.
12. Method according to any of the preceding points, wherein the toolset further comprises algorithms for generating performance logs at the client units, the performance logs being respectively indicative of how a respective one of the machine learned models performs on the respective local data.
13. Method according to any of the preceding points, wherein the toolset is configured such that at least one incremental machine learned model can be derived from the toolset at the client units.
14. Method according to any of the preceding points, wherein the toolset comprises a plurality of untrained and trainable machine learning algorithms with different decision boundaries.
15. Method according to any of the preceding points, further with the steps of:
   receiving, from at least one of the client units, configurational data; and
   configuring the toolset according to the configurational data.
16. Method according to 15, further with the step of preselecting one or more untrained and trainable machine learning algorithms for the toolset on the basis of the configurational data.
17. Method according to any of the preceding points, further with the steps of:
   receiving, from at least one of the client units, configurational data; and
   selecting a machine learned model stored in the central server unit for download to the at least one client unit on the basis of the configurational data.
18. Method according to any of the preceding points, wherein the step of receiving one or more machine learned models from the at least one client unit comprises receiving associated information corresponding to the one or more machine learned models.
19. Method according to any of the preceding points, wherein the step of receiving one or more machine learned models from the at least one client unit comprises respectively assigning a unique identifier to the one or more machine learned models.
20. Method according to 19, wherein the step of storing comprises storing the one or more machine learned models on the basis of the unique identifier.
21. Method according to any of the preceding points, wherein the toolset comprises algorithms for performing, at the client units, a cross-validation procedure of the one or more machine learned models available at the respective client units, in particular a nested cross-validation procedure or a cross-validation procedure according to any one of points 22 to 24.
22. Method for locally cross-validating incremental machine learned models in a system comprising a plurality of client units, wherein the client units are respectively located at different local sites and respectively comprise local data, and wherein incremental machine learned models are machine learned models the learning of which can be resumed by incremental machine learning,
   the method comprising the steps of:
   providing, to at least one of the client units, an initial incremental machine learned model;
   partitioning the local data of the at least one client unit into a plurality of folds; and
   performing one or more cross-validating operations across the folds to obtain an updated incremental machine learned model and an associated performance log indicative of how the updated incremental machine learned model performs on the respective local data, wherein the cross-validating operations involve the continuous further training of incremental machine learned model by incremental machine learning.
23. Method according to 22, wherein the step of performing further comprises:
   determining a set of optimized hyperparameters of the incremental machine learned model by further training the incremental machine learned model using a first subset of the folds by incremental machine learning, preferably without permutating the folds in the first subset;
   generating a partial performance log by testing the resulting incremental machine learned model with the set of optimized hyperparameters on a second subset of the folds different than the first subset;
   repeating the steps of determining and generating for permutations of the first and second subsets across the folds, wherein the incremental machine learned model is being continuously further trained from permutation to permutation by incremental machine learning to generate the updated incremental machine learned model and, for each permutation, a further partial performance log; and
   generating the performance log on the basis of the partial performance logs.
24. Method according to 23, wherein the step of determining the set of optimized hyperparameters comprises:
   further training the incremental machine learned model for a first set of values for the set of hyperparameters of the incremental machine learned model on a first fold of the first subset of folds by incremental machine learning;
   determining the hyperparameter performance of the resulting incremental machine learned model on a second fold of the first subset different than the first fold;
   repeating the steps of further training and determining the hyperparameter performance for further sets of values of the set of hyperparameters on the first fold and second fold; and
   determining an optimized set of values for the set of hyperparameters on the basis of the hyperparameter performance so as to generate a corresponding set of optimized hyperparameters.
25. Central server unit for client-specific federated learning in a system comprising a plurality of client units, wherein the client units are respectively located at different local sites and respectively comprise local data,
   the central server unit comprising:
   an interface unit configured to communicate with the client units;
   a computing unit; and
   a repository;
   the computing unit being configured to
   provide, to the client units via the interface unit, a toolset, the toolset being configured such that a plurality of different types of machine learned models can be derived from the toolset;
   receive, from the client units via the interface unit, machine learned models, the machine learned models being respectively derived from the toolset and trained based and the local data by the client units;
   store the received machine learned models in the repository.
26. Central server unit according to 25 further comprising a database in which a plurality of untrained and trainable machine learning algorithms is stored, wherein the computing unit is further configured to assemble the toolset based on the plurality of machine learned algorithms stored in the database.
27. Computer-implemented method for client-specific federated learning in a system comprising a central server unit and a plurality of client units, wherein the client units are respectively located at different local sites and respectively comprise local data,
   the method comprising the steps of:
   providing, to at least one of the client units, a set (or number) of different types of untrained and trainable machine learning algorithms which are capable of being trained using the local data with methods of machine learning so that a plurality of different types of machine learned models can be created from the machine learning algorithms;
   receiving, from the at least one client unit, one or more machine learned models, the one or more machine learned models being respectively created from the machine learning algorithms and trained based and the respective local data by the at least one client unit; and
   storing the one or more machine learned models in the central server unit.
28. Method according to 27, further with the step of
   providing, to at least one of the client units, algorithms for generating performance logs, the performance logs being respectively indicative of how a respective one of the machine learned models performs on the respective local data.
29. Method according to 27 or 28, wherein the set of machine learning algorithm is configured such that at least one, preferably different types of, incremental machine learned model can be created therefrom at the client units.
30. Method according to 27 to 29, wherein the machine learning algorithms comprise a plurality of machine learning algorithms respectively with different decision boundaries.
31. Method according to 27 to 30, further with the steps of:
   receiving, from at least one of the client units, configurational data; and
   confectioning (or selecting) the set of machine learning algorithms according to the configurational data.
32. Cross-validation method for incremental machine learned models the training of which can be resumed by incremental machine learning, the method comprising the steps of:
   providing data for performing the cross-validation;
   partitioning the data into a plurality of folds;
   defining an outer cross-validation loop and an inner cross-validation loop nested with the outer cross-validation loop so that for each iteration of the outer loop multiple iterations of the inner loop are carried out;
   selecting, in each iteration of the outer loop, from the plurality of folds, a first fold, a second fold different to the first fold, and a third fold different to the first and second folds, so that first, second and third folds are permutated across the folds over the iterations of the outer loop;
   determining, in each iteration of the outer loop,
      a set of optimized hyperparameters of the incremental machine learned model on the basis of multiple iterations of the inner loop, wherein each iteration of the inner loop uses the first fold for the further training of the incremental machine learned model by incremental machine learning and the second fold for validating the further trained incremental machine learned model so as to determine the set of optimized hyperparameters; and
      an indication of the performance of the corresponding incremental machine learned model with optimized hyperparameters using the third fold.

## Claims

1. Computer-implemented method for client-specific federated learning in a system comprising a central server unit (100) and a plurality of client units (300), wherein the client units (300) are respectively located at different local sites (XA, XB) and respectively comprise local data (D(A), D(B)),
the method comprising the steps of:
providing (S10), to one or more of the client units (300), a toolset (TS), the toolset (TS) being configured such that a plurality of different types of machine learned models (A, B, Ai, Bi) can be created from the toolset (TS) at the one or more client units (300);
receiving (S20), from the one or more client units (300), one or more machine learned models (A, Ai, B, Bi), the one or more machine learned models (A, Ai, B, Bi) being respectively created from the toolset (TS) and trained based and the respective local data (D(A), D(B)) by the client units (300); and
storing (S30) the one or more machine learned models (A, Ai, B, Bi) in the central server unit (100).

2. Method according to claim 1, wherein the one or more machine learned models (A, Ai, B, Bi) received from the one or more client units (300) comprise one or more incremental machine learned models (Ai, Bi), the learning of which can be resumed by incremental machine learning.

3. Method according to any of the preceding claims, wherein the toolset (TS) comprises a plurality of different untrained and trainable machine learning algorithms which are capable of being trained with local data using methods of machine learning.

4. Method according to any of the preceding claims, further with the step of:
downloading (S50), to one or more of the client units (300), one or more cross-site machine learned models (B, Bi, BixA) from the central server unit (100), which cross-site machine learned models (B, Bi, BixA) have been created at client units (300) different to the one or more client units (300) they are downloaded to.

5. Method according to any of the preceding claims, further with the steps of:
receiving (S20), from one or more of the client units (300), one or more updated machine learned models (Ai*, BixA), the updated machine learned models (Ai*, BixA) being machine learned models updated locally by the one or more client units (300) based on respective local data (D(A), D(B)) of the one or more client units (300); and
storing (S30) the one or more updated machine learned models (Ai*, BixA) in the central server unit (300).

6. Method according to claim 5, further with the step of:
downloading (S50) the one or more updated machine learned models (Ai*, BixA) to all client units (300) that use previous versions of the respective one or more updated machine learned models (Ai*, BixA).

7. Method according to any of the preceding claims, further with the step of:
evaluating (S40), at the central server unit (100), the performance of one or more of the machine learned models (A, B, Ai, Bi, Ai*, BixA) in processing the respective local data (D(A), D(B)) of the respective one or more client units (300) .

8. Method according to any of the preceding claims, further with the step of:
receiving (S20), from at least one of the client units (300), one or more performance logs (PL(A), PL(B), PL(Ai), PL(Bi), PL(BixA)), wherein
the one or more performance logs (PL(A), PL(B), PL(Ai), PL(Bi) are generated locally at the respective client unit (300),
each performance log (PL(A), PL(B), PL(Ai), PL(Bi), PL(BixA)) of the one or more performance logs (PL(A), PL(B), PL(Ai), PL(Bi) corresponds to a machine learned model (A, B, Ai, Bi, BixA) available at the respective client unit (300); and
each performance log (PL(A), PL(B), PL(Ai), PL(Bi), PL(BixA)) of the one or more performance logs (PL(A), PL(B) is respectively indicative of how the corresponding machine learned model (A, B, Ai, Bi, BixA) performs on the local data (D(A), D(B)) of the respective client unit (300); and
wherein the method further comprises the step of:
evaluating (S40), at the central server unit (100), the performance of one or more machine learned models (A, B, Ai, Bi, BixA) on the basis of the corresponding one or more received performance logs (PL(A), PL(B), PL(Ai), PL(Bi), PL(BixA)) .

9. Method according to claims 7 or 8, further with at least one of the following steps:
determining, on the basis of the step of evaluating, whether or not to deploy a machine learned model (A, B, Ai, Bi, BixA) locally at the respective client units (300); and/or
determining, on the basis of the step of evaluating, whether or not to update one or more of the machine learned models (A, B, Ai, Bi, BixA) locally at the respective client units (300) to generate corresponding updated machine learned models (Ai*), and initiating the corresponding update; and/or
determining, on the basis of the step of evaluating, whether or not to download one or more cross-site machine learned models (A, B, Ai, Bi, BixA) from the central server unit to one or more of the local sites (300), which cross-site machine learned models have been trained at client units (300) different to the one or more client units (300) they are downloaded to; and/or
comparing, on the basis of the step of evaluating, a plurality of machine learned models (A, B, Ai, Bi, BixA) available at a client unit (300); and/or
determining, on the basis of the step of evaluating, the value of the local data (D(A), D(B)) of one or more of the client units (300).

10. Method according to any of the preceding claims, further with the steps of:
providing (S50, C50), to at least one of the client units (300), an incremental machine learned model (Ai, Bi), the learning of which can be resumed by incremental machine learning;
partitioning (M10) the local data (D(A), D(B)) of the at least one client unit (300) into a plurality of folds; and
performing (M20, M30, M40) one or more cross-validating operations on the incremental machine learned model (Ai, Bi) across the folds to obtain (M50, M60) an updated incremental machine learned model (Ai*, Bi*, BixA) and an associated performance log (PL(Ai*), PL(Bi*), PL(BixA)) indicative of how the updated incremental machine learned model (Ai*, Bi*, BixA) performs on the local data (D(A), D(B)) of the at least one client unit (300), wherein the cross-validating operations involve the continuous further training of the incremental machine learned model (Ai, Bi) by incremental machine learning.

11. Method according to any of the preceding claims, further with the steps of:
receiving (S20), from one or more of the client units (300), one or more configuration files (CF(A), CF(B), CF(Ai), CF(Bi), CF(BixA)) locally generated at the one or more client units (300), each configuration file (CF(A), CF(B), CF(Ai), CF(Bi), CF(BixA)) being respectively indicative of the local configuration of the respective machine learned model (A, B, Ai, Bi, BixA) at the respective client unit; and
storing (S30) the one or more configuration files (CF(A), CF(B), CF(Ai), CF(Bi), CF(BixA)) at the central server unit (100).

12. Central server unit (100) for client-specific federated learning in a system comprising a plurality of client units (300), wherein the client units (300) are respectively located at different local sites (XA, XB) and respectively comprise local data (D(A), D(B)),
the central server unit (100) comprising:
an interface unit configured to communicate with the client units (300);
a computing unit (110); and
a memory unit (120, 121, 122);
the computing unit (110) being configured to
provide, to at least one client unit (300) via the interface unit, a toolset (TS), the toolset (TS) being configured such that a plurality of different types of machine learned models can be created with the toolset (TS) at the client units (300);
receive, from the at least one client unit (300) via the interface unit, one or more machine learned models (A, Ai, B, Bi), the one or more machine learned models (A, Ai, B, Bi) being respectively created with the toolset (TS) and trained based and the local data (D(A), D(B)) by the at least one client unit (300);
store the received one or more machine learned models (A, Ai, B, Bi) in the memory unit (120, 121).

13. Central server unit according to claim 12, wherein the memory unit (120, 121) comprises a plurality of different types of machine learned models from different client units (300) .

14. Computer program product comprising program elements which induce a computing unit of a system for client-specific federated learning to perform the steps according to the method of any of claims 1 to 11, when the program elements are loaded into a memory of the computing unit.

15. Computer-readable medium on which program elements are stored that are readable and executable by a computing unit of a system for client-specific federated learning, in order to perform steps of the method according to any of claims 1 to 11, when the program elements are executed by the computing unit.
